# EUROPEAN PATENT APPLICATION

(11) **EP 4 775 882 A1**
(43) Date of publication of application: **15.07.2026**
(21) Application number: 25150769.5
(22) Date of filing: 08.01.2025
(51) Int. Cl.: F22B 37/10, F22B 37/20

(54) **SHORTENED PIPING LAYOUT FOR STEAM CYCLE CIRCUIT OF COMBINED-CYCLE POWER PLANT**

(71) Applicant: GE Vernova Technology GmbH, 5400 Baden (CH)
(72) Inventor: PERAK, Darko, 5415 Nussbaumen (CH); DOKIC, Borislav, 5415 Nussbaumen (CH); MUKHERJEE, Shubha Sankar, 121002 Faridabad (IN); LYE, Kong-Yow, 53300 Kuala Lumpur (MY)
(74) Representative: Casalonga

(57) **Abstract**

A shortened piping layout for a steam cycle circuit (352) of a combined-cycle power plant (354) without thermal expansion loops is provided. The piping layout includes a first steam pipe (366) to provide a first supply of main steam from a steam generating source (356) to a first turbine section (126, 226) of a steam turbine system (358). A first steam admission valve (361) is configured to receive the first supply of main steam at a bottom portion. A cold reheat steam pipe (368) supplies cold reheat steam exhausted from the first turbine section to the steam generating source for reheating. A hot reheat steam pipe (370) supplies hot reheat steam from the steam generating source to a second turbine section. At least one reheat steam admission valve (363) is configured to receive the hot reheat steam at a side portion for introduction to a side portion of the second turbine section.

## Description

### TECHNICAL FIELD

Embodiments of this disclosure relate generally to combined-cycle power plants and, more specifically, to a shortened piping layout for a steam cycle circuit of a combined-cycle power plant (CCPP) that provides long, straight vertical and horizontal pipe sections in an area about a heat recovery steam generator (HRSG) and a steam turbine system of the CCPP, with the capability to accommodate piping thermal expansion, to lower loads on equipment, and to keep thermal stresses in the steam turbine piping system in the allowable stress range.

### BACKGROUND

In general, a CCPP includes a gas turbine system and a steam turbine system that work together to produce energy. The gas turbine system combusts a mixture of fuel with an air flow and directs it through an expansion turbine to generate power. Exhaust from the gas turbine is used in a HRSG to create steam that is directed to the steam turbine system to generate power. Piping carries the steam from the HRSG to the steam turbine system. The piping is part of a steam cycle circuit. The steam turbine system may have a number of steam turbine sections or segments configured to receive steam from the HRSG with each steam flow having different characteristics. For example, steam may be delivered in a number of steam flow pipes carrying high, intermediate, and low pressure steam to high pressure (HP), intermediate pressure (IP), and low pressure (LP) steam turbine sections, respectively. Each steam turbine section may include its own admission valve(s) that controls flow of steam thereto. The CCPP may use one or more generators operatively coupled to the gas turbine and steam turbine systems to generate electrical power. In addition, a condenser is positioned downstream of the LP turbine section of the steam turbine system to condense the steam.

The piping for the various steam flows typically requires very complex layouts in order to address a number of challenges. First, the piping layouts are arranged to handle appropriate piping thermal expansion during operation. In this regard, piping layouts can include large horizontal and vertical thermal expansion loops in the pipes for each of the steam flows. Thermal expansion loops are typically positioned in the immediate vicinity of pipe connection points to the HRSG / steam turbine or on the main civil structure of the piping such as a piping or pipe rack. Each loop is also relatively long and consumes a large horizontal and/or vertical area above the floor of the CCPP and requires a significant increase in piping material quantity.

A second challenge is that the piping layouts require routing from the HRSG to the respective steam turbine sections and other structure in the CCPP (e.g., other piping, support structures, various parts of the gas or steam turbine systems and ancillary devices such as pumps, air inlets, etc.). Each structure may be at different heights relative to the floor of the CCPP, further complicating the piping layout.

A third challenge is that adequate structural support must be provided for the piping layouts so that the pipes are within stress limits (defined by a piping code) and so that the system can operate reliably and safely. The main structural or civil support of the piping typically includes large steel rack structures that are supported on the floor of the CCPP. The piping itself, by means of support hardware, is supported or suspended from the structures. In general, the structures are complex to build and increase the CCPP size requirements.

In view of the foregoing challenges, piping layouts are typically long and complex and, as a result, are expensive to build. A simplified piping layout would provide a useful advancement in the industry.

### BRIEF DESCRIPTION

The following presents a simplified summary of the disclosed subject matter in order to provide a basic understanding of some aspects of the various embodiments described herein. This summary is not an extensive overview of the various embodiments. It is not intended to exclusively identify key features or essential features of the claimed subject matter set forth in the Claims, nor is it intended as an aid in determining the scope of the claimed subject matter. Its sole purpose is to present some concepts of the disclosure in a streamlined form as a prelude to the more detailed description that is presented later.

Because the piping layout for a steam cycle circuit in a combined-cycle power plant (CCPP) is typically complex, expensive and occupies a large, horizontal and/or vertical space within the plant due to its long arrangement of the piping, plant operators have a need for a piping layout that is less complex, that is less costly, and that occupies a smaller footprint and volume in the CCPP, all while still having the capability to accommodate piping thermal expansion during operation, to lower loads on equipment piping (defined by equipment suppliers), and to keep piping thermal stresses in an allowable stress range (defined by a piping code).

The solution provided by the various embodiments to the technical problem of developing a piping layout for a steam cycle circuit in a CCPP is an optimized piping layout for the main steam pipes in the circuit of the power plant that include pipes for high pressure (HP) steam, low pressure (LP) steam, cold reheat steam, and hot reheat steam. Unlike conventional piping layouts used in typical CCPPs, the piping layout of the various embodiments does not include the use of horizontal and/or vertical thermal expansion loops in the immediate vicinity of the connection points of the pipes with the steam turbine system and the heat recovery steam generator (HRSG). Further, the various embodiments do not utilize thermal expansion loops on the civil structure (e.g., piping support racks).

In one embodiment, an HP pipe can supply HP steam from the HRSG to a bottom portion of an HP steam admission valve (i.e., a bottom connection) that supplies the HP steam to the HP turbine section, while a hot reheat pipe can provide hot reheat steam from the HRSG to a side portion of at least one reheat steam admission valve (i.e., a side connection) for supply to of an IP turbine section. In this configuration, thermal expansion loops can be avoided in these areas where the HP pipe and the hot reheat pipe connect with the steam turbine system via the corresponding steam admission valves.

In one embodiment, selected sections of the HP pipe, the cold reheat pipe, the hot reheat pipe, and the LP pipe in the immediate vicinity of the HRSG can extend vertically and generally straight about a side region of the HRSG and run horizontally over a top region of the HRSG to connect therewith at corresponding connection points without any thermal expansion loops located about the top region of the HRSG.

The optimized piping layout of the various embodiments can also include the use of routing equipment to route the main steam pipes in an organized manner to facilitate a shortened layout where thermal expansion loops that typically ask for "doubling" of pipe length in the case of an "ideal loop" are avoided. Some of the routing equipment can include the civil structure (e.g., piping or a pipe rack) that can support the sections of the HP steam pipe, the cold reheat pipe, the hot reheat pipe, and the IP steam pipe that extend between the HRSG and the steam turbine system. In one embodiment, the civil structure can include a first civil structure to support long horizontally extending straight sections of the HP steam pipe, the cold reheat pipe, the hot reheat pipe, and the LP steam pipe that extend between the HRSG and the steam turbine system. The civil structure can also include a second civil structure within the immediate vicinity of steam connections to the steam turbine system that can support sections of the HP steam pipe, the cold reheat pipe, the hot reheat pipe, and the LP steam pipe in this area.

Despite removal of any thermal expansion loops in the immediate vicinity of the steam turbine system and the HRSG, and with the main structural support or civil structure of the piping, the optimized piping layout of the various embodiments is still flexible in that it has the capability to accommodate piping thermal expansion during operation, to lower loads on equipment, and to keep thermal stresses in the steam turbine piping system in an allowable stress range. The flexibility in the piping layout can be attained through several ways. For example, the horizontally extending sections of the main steam pipes can be moved laterally away from the centerline axis extending between the HRSG and the steam turbine system (e.g., the powertrain axis of the HRSG and the steam turbine system) and can be elevated at a predetermined distance off the floor of the CCPP with respect to their corresponding connection points to the steam turbine system. Thus, in general, the flexibility in the piping layout can be achieved by making adjustments to the lateral offset of the main steam pipes from a horizontal distance extending between connection points on the HRSG and the steam turbine system and adjustments to a delta in elevation between the elevation of the pipes as supported by a civil structure and the elevation of the pipes at their corresponding connection points with the steam turbine system.

The piping layout of the various embodiments can also utilize a combination of a plurality of piping supports (e.g., piping support hardware) located about the civil structure to support various sections of the main steam pipes in order to help accommodate piping thermal expansion during operation, to lower loads on equipment piping, and to keep piping thermal stresses in the steam turbine piping system in an allowable stress range. The piping supports can include a combination of piping support hardware selected from the group consisting of suspension supports (e.g., hangers), rigid struts, bottom-positioned pipe supports, pipe guide structures, shock absorbers, variable spring supports, and angulating variable spring supports. In addition, the piping supports can also include piping support steel (i.e., small and short steel sections / structures), which are often needed to connect the piping support hardware to the main piping supporting structures.

In one embodiment, one or more axial restraints can be located at an end of the civil structure close to the steam turbine system. In this manner, the one or more axial restraints can push thermal expansion of the HP steam pipe, the cold reheat pipe, the hot reheat pipe, and the LP pipe towards the HRSG for absorption in sections of the pipes in the immediate vicinity of the HRSG that extend vertically about the side region. The use of the one or more axial restraints is also helpful in ensuring that only minimal forces and moments are exerted on steam turbine connections and nozzles in the respective turbine sections of the steam turbine system.

In accordance with one embodiment, a piping layout for a steam cycle circuit of a combined-cycle power plant having a steam generating source and a steam turbine system is provided. The piping layout comprises: a first steam pipe to provide a first supply of main steam from the steam generating source to a first turbine section of the steam turbine system via a first steam admission valve at a first steam pressure, wherein the first steam pipe connects to a bottom portion of the first steam admission valve; a cold reheat steam pipe to supply cold reheat steam exhausted from the first turbine section to the steam generating source for reheating thereof; a hot reheat steam pipe to supply hot reheat steam produced in the steam generating source from mixing of the cold reheat steam with steam in the steam generating source to a second turbine section of the steam turbine system via at least one reheat steam admission valve at a second steam pressure, wherein the hot reheat steam pipe connects to a side portion of the at least one reheat steam admission valve; and a second steam pipe to provide a second supply of main steam from the steam generating source to a third turbine section of the steam turbine system via at least one third steam admission valve at a third steam pressure; wherein an arrangement of the first steam pipe, the cold reheat steam pipe, the hot reheat steam pipe, and the second steam pipe between the steam generating source and the steam turbine system including within the immediate vicinity of connection points thereof are without thermal expansion loops.

In accordance with another embodiment, a combined-cycle power plant is provided. The combined-cycle power plant comprises: a gas turbine system; a steam generating source in fluid communication with the gas turbine system, the steam generating source being a heat recovery steam generator to generate steam from exhaust of the gas turbine system; a steam turbine system including a high pressure section, an intermediate pressure section, and a low pressure section; and a steam cycle circuit operatively coupled to the heat recovery steam generator and the steam turbine system, the steam cycle circuit having a piping layout that includes: a high pressure steam pipe to provide a supply of high pressure steam from the heat recovery steam generator to the high pressure turbine section of the steam turbine system via a high pressure steam admission valve, wherein the high pressure steam pipe connects to a bottom portion of the high pressure steam admission valve; a cold reheat steam pipe to supply cold reheat steam exhausted from the high pressure turbine section to the heat recovery steam generator for reheating thereof; a hot reheat steam pipe to supply hot reheat steam produced in the heat recovery steam generator from mixing of the cold reheat steam with steam in the heat recovery steam generator to the intermediate pressure turbine section of the steam turbine system via at least one reheat steam admission valve at an intermediate pressure, wherein the hot reheat steam pipe connects to a side portion of the at least one reheat steam admission valve with a side connection; and a low pressure steam pipe to provide a supply of low pressure steam from the heat recovery steam generator to the low pressure turbine section of the steam turbine system via at least one low pressure steam admission valve at a low pressure; wherein an arrangement of the high pressure steam pipe, the cold reheat steam pipe, the hot reheat steam pipe, and the low pressure steam pipe between the heat recovery steam generator and the steam turbine system including within the immediate vicinity of connection points thereof are without thermal expansion loops.

### BRIEF DESCRIPTION OF THE DRAWINGS

The present technology will be better understood from reading the following description of non-limiting embodiments, with reference to the attached drawings, wherein below:
FIG. 1 shows a schematic diagram of a combined cycle power plant (CCPP) that may employ any of the various embodiments of the disclosure;
FIG. 2 shows a schematic diagram of another CCPP that may employ any of the various embodiments of the disclosure;
FIG. 3 shows a perspective view of a piping layout for steam flow pipes in a CCPP according to the prior art with the flexibility mainly provided on the main civil structure or pipe rack by the means of a predominant horizontal loop;
FIG. 4 shows a perspective view of another piping layout for steam flow pipes in a CCPP according to the prior art with the flexibility provided with (vertical) loops in the vicinity of the steam turbine system and the heat recovery steam generator (HRSG) connections;
FIG. 5 shows a perspective view of a piping layout for steam flow pipes in a CCPP according to an embodiment of the disclosure where flexibility is achieved by offsetting the civil structure / piping from the HRSG-steam turbine axis and increasing the elevation of the steam turbine compared to civil structure elevation;
FIG. 6 shows a detailed perspective view of a hot reheat steam pipe from the piping layout depicted in FIG. 5 according to an embodiment of the disclosure;
FIG. 7 shows a detailed perspective view of a high pressure (HP) steam pipe and cold reheat steam pipe from the piping layout depicted in FIG. 5 according to an embodiment of the disclosure;
FIG. 8 shows a detailed perspective view of a low pressure (LP) steam pipe from the piping layout depicted in FIG. 5 according to an embodiment of the disclosure;
FIGS. 9A and 9B show schematic views of a rigid hanger and a variable spring hanger, respectively, that can be deployed as piping supports in a piping layout according to an embodiment of the disclosure;
FIGS. 10A and 10B show schematic views of an angulating variable spring support and a variable spring support, respectively, that can be deployed as piping supports in a piping layout according to an embodiment of the disclosure;
FIG. 11 shows a schematic view of a bottom-positioned rigid pipe support that can be deployed as a piping support in a piping layout according to an embodiment of the disclosure;
FIG. 12 shows a schematic view of a constant hanger that can be deployed as a piping support for a vertical pipe section in a piping layout according to an embodiment of the disclosure;
FIG. 13 shows a schematic view of a shock absorber that can be deployed as piping support in a piping layout according to an embodiment of the disclosure;
FIG. 14 shows a schematic view of a rigid structure that can be deployed as piping support to provide lateral restraint in a piping layout according to an embodiment of the disclosure;
FIG. 15 shows a schematic view of a support structure that can be deployed as part of piping support to provide axial restraint in a piping layout according to an embodiment of the disclosure; and
FIG. 16 shows a schematic view of a pipe guide that can be deployed as a piping support in a piping layout according to an embodiment of the disclosure.

### DETAILED DESCRIPTION

Example embodiments of the present disclosure will be described more fully hereinafter with reference to the accompanying drawings, in which some, but not all embodiments are shown. Indeed, the present technology may be embodied in many different forms and should not be construed as limited to the embodiments set forth herein. Rather, these embodiments are provided so that this disclosure will satisfy applicable legal requirements. For ease of understanding, like numbers may refer to like elements throughout.

Throughout the discussion that follows, it may become necessary to use certain descriptive terms when referring to and describing relevant machine components within a steam cycle circuit, a gas turbine system, a steam turbine system, and/or a combined cycle power plant (CCPP). When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the steam through a piping layout or, for example, the flow of air through a combustor or coolant through one of the turbine's component systems. For example, the term "downstream" corresponds to the direction of flow of the fluid, and the term "upstream" refers to the direction opposite to the flow.

It is often required to describe parts that are at different radial positions with regard to a center axis. The term "radial" refers to movement or position perpendicular to an axis. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to an axis. Finally, the term "lateral" refers to movement or position in the horizontal plane, perpendicular to a pipe axis. It will be appreciated that such terms may be applied, also, in relation to the center axis of the turbine.

Terms of approximation, such as "about," "approximately," "around," "generally," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, or 10 percent margin in either individual values, range(s) of values and/or endpoints defining range(s) of values.

As indicated above, the disclosure provides a shortened piping layout for the steam cycle circuit of a CCPP that includes long, straight vertical and/or horizontal pipe sections in an area about a heat recovery steam generator (HRSG) and a steam turbine system of the CCPP without deploying long horizontal and/or vertical thermal expansion loops in either the immediate vicinity of the connection points of the pipes with the steam turbine system and the HRSG, or on the main structural or civil structure of the piping (i.e., the main piping supporting structures (e.g., the piping rack)). As used herein, "a thermal expansion loop" means vertical piping, horizontal piping, or a combination of horizontal and vertical piping that form a U-shape or mostly U-shape with substantial, in an ideal case, duplicate pipe length in the U-shape that can be placed on the main civil structure (e.g., the piping rack) and/or in the immediate vicinity of the connection points of the pipes with the steam turbine system and the HRSG, which serves to accommodate piping thermal expansion and which does not equate with mere changes in direction of the piping.

In addition, as used herein, "in the immediate vicinity of the connection points of the pipes with the steam turbine system and the HRSG" means the area, region or location about the steam turbine system and the HRSG at which a flow path of steam supplied to or distributed from the main steam pipe of the pipes is flowing directly to or from the steam turbine system and the HRSG corresponding connection points without any significant deviation (e.g., a path that moves away from the connection points to a cause a considerable disruption of the flow path to and from the steam turbine system and the HRSG). To this extent, the shortened piping layout of the various embodiments is optimized to be flexible to accommodate piping thermal expansion during operation of the CCPP, to lower loads on equipment, and to keep thermal stresses in the steam turbine system in an allowable stress range.

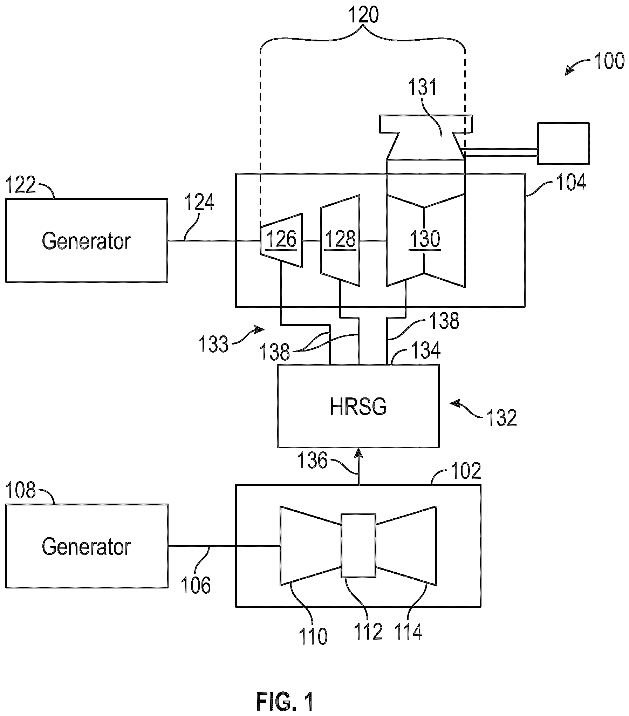

Referring now to the figures, FIG. 1 shows a schematic view of portions of an illustrative CCPP 100. The CCPP is one example of a plant in which teachings of the disclosure may be employed. In the instant example, CCPP 100 is a multiple shaft system with two generators, but one with skill in the art will readily understand that the teachings of the disclosure are applicable to any variety of CCPPs. As shown in FIG. 1, the CCPP 100 may include a gas turbine system 102 and a steam turbine system 104.

Gas turbine system 102 may be mechanically coupled by a shaft 106 to a first generator 108, which generates electrical energy. Gas turbine system 102 may include a compressor 110 and a combustor 112. Gas turbine system 102 also includes gas turbine (i.e., an expansion turbine) 114 coupled to common compressor/turbine shaft 106. In one embodiment, gas turbine system 102 is an F-class engine, such as a 9F.04 engine, commercially available from GE Vernova, Greenville, S.C. The present disclosure is not limited to any one particular gas turbine system and may be implanted in connection with other engines including, for example, the 7FA, 7FB, 9FA, 7HA, or 9HA engine models of GE Vernova. In operation, air enters the inlet of compressor 110, is compressed and then discharged to combustor 112 where gaseous or liquid fuel (e.g., natural gas or oil) is burned to provide high energy combustion gases which drive gas turbine 114. In gas turbine 114, the energy of the hot gases is converted into work, some of which is used to drive compressor 110 through rotating shaft 106, with the remainder available for useful work to drive a load such as first generator 108 via shaft 106 for producing electricity.

Steam turbine system 104 can include a steam turbine 120 that is operably coupled to another generator 122 through shaft 124. Steam turbine system 120 may include one or more steam turbine sections or segments, e.g., as shown, a high pressure (HP) section 126, an intermediate pressure (IP) section 128 and a low pressure (LP) section 130. Each section 126, 128, 130 includes a plurality of rotating blades (not shown) mechanically coupled to shaft 124, which rotate the shaft based on the steam flow thereover. A condenser 131 may be operably coupled to an appropriate steam turbine section, e.g., a last-in-line section such as LP section 130 (e.g., a lateral condenser arrangement, an above-ground underslung condenser).

CCPP 100 may also include a steam generating source 132, which may include a heat recovery steam generator (HRSG) 134 operably connected to gas turbine system 102 and steam turbine system 104. As understood, exhaust 136 from gas turbine system 102 is used by HRSG 134 to create steam flow(s) 138 for use by steam turbine system 104. HRSG 134 may include a conventional HRSG configuration, such as those used in conventional combined cycle power systems, and/or may be embodied as another type of heat exchanger or similar component for using exhaust energy to produce steam. For example, HRSG 134 may include a thermally conductive pipe, line, etc., with water therein such that water in HRSG 134 is heated by exhaust 136 to produce steam flow(s) 138. HRSG 134 may be fluidly connected to both gas turbine system 102 and steam turbine system 104 via conventional piping described further herein, for which numbering is omitted.

In operation, steam from steam generating source 132 (e.g., HRSG 134 and perhaps other sources) is directed through steam flow pipes of a steam cycle circuit 133 (described in greater detail herein) and enters an inlet of HP section 126, IP section 128, and/or LP section 130. Steam is channeled therein to impart a force on blades thereof causing shaft 124 to rotate. As understood, steam formed in an upstream turbine section may be employed later in a downstream turbine section. The steam thus produced by steam generating source 132 drives at least a part of steam turbine system 104 in which work is extracted to drive shaft 124 and an additional load such as for example, a second generator 122 which, in turn, produces additional electric power.

It is understood that generators 108, 122 and shafts 106, 124 may be of any size or type known in the art and may differ depending upon their application or the system to which they are connected. Common numbering of the generators and shafts is for clarity and does not necessarily suggest these generators or shafts are identical.

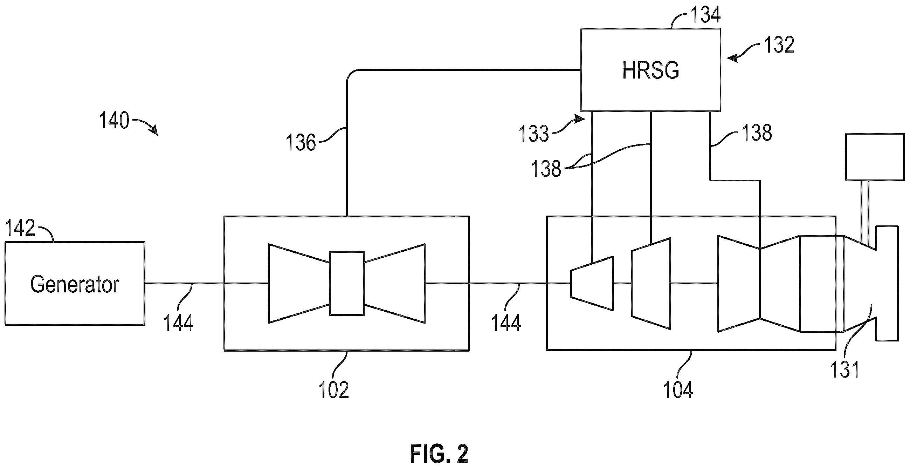

In another embodiment, shown in FIG. 2, a single shaft combined cycle power plant 140 may include a single generator 142 coupled to both gas turbine system 102 and steam turbine system 104 via a common shaft 144. Steam generating source 132 (HRSG), steam turbine system 104, and/or gas turbine system 102 may be similar to those described relative to FIG. 1. Here, also, condenser 131 may be operably coupled to an appropriate steam turbine section, e.g., a last-in-line section such as an LP section (axial condenser arrangement). However embodied, the CCPP 100 (FIG. 1), 140 (FIG. 2) incorporating the gas turbine system 102, the steam generating source 134, and the steam turbine system 104 can include or interact with any now known or later developed control system (not shown) to provide automated control thereof.

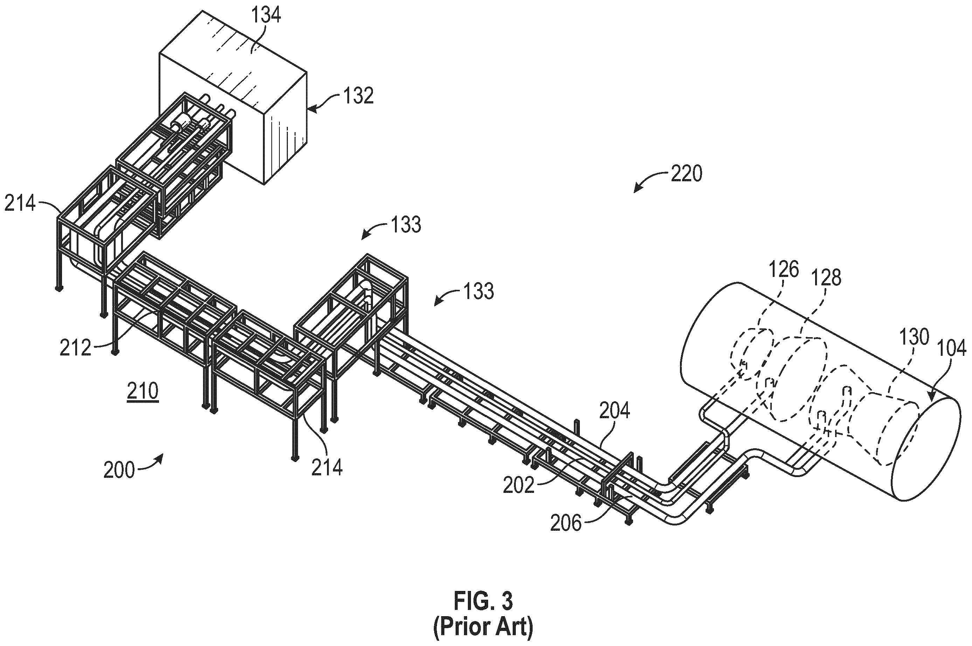

As shown in FIGS. 1 and 2, steam flows 138 from steam generating source 132 are fed to steam turbine system 104 using steam cycle circuit 133. Each steam flow 138 (FIGS. 1 and 2) is provided in a respective steam flow pipe of steam cycle circuit 133. FIG. 3 shows a perspective view of a conventional piping layout 200 in which steam flow pipes 202, 204, 206 for, respectively, HP section 126, IP section 128, and LP section 130, are shown as part of a CCPP 220. Steam flow pipes 202, 204, 206 are coupled to respective manifolds (not shown) in HRSG 134 that supply the appropriate pressure steam. Each pipe 202, 204, 206 exits from HRSG 134 at a point relatively high off of a floor 210 of the CCPP (gas turbine system not shown in FIG. 3) and is directed along a path toward steam turbine sections 126, 128, 130.

In order to allow thermal expansion of the steam, as illustrated, a large, horizontal thermal expansion loop 212 with a large, complex, civil structure 214 is provided in piping layout 200 extending from the HRSG 134. As shown in FIG. 3, the large, horizontal thermal expansion loop 212 extends from a side of the HRSG 134 to a portion of the civil structure 214 that transitions to a horizontally extending region of the structure and then runs in a lateral direction towards a central axis extending longitudinally through the HRSG in an axial direction to form a mostly horizontal U-shape. Civil structure 214 may include vertical piping sections that couple the horizontal piping sections and that result in the horizontal piping sections being located at different heights from floor 210. The thermal expansion loop 212 in this configuration allows for thermal expansion of the steam, preventing damage to, among other things, the pipes. Civil structure 214 provides support for the large thermal expansion loop 212 as well as other portions of the piping (e.g., the horizontal extending portions of the steam pipes that extend from the U-shaped loop 212 and connect with the steam turbine system 104). For example, once through the horizontal thermal expansion loop 212, pipes 202, 204, 206 run along the floor 210 of the CCPP. Pipes 202, 204, 206 enter their respective steam turbine section 126, 128, 130 from below via corresponding admission valves (not shown).

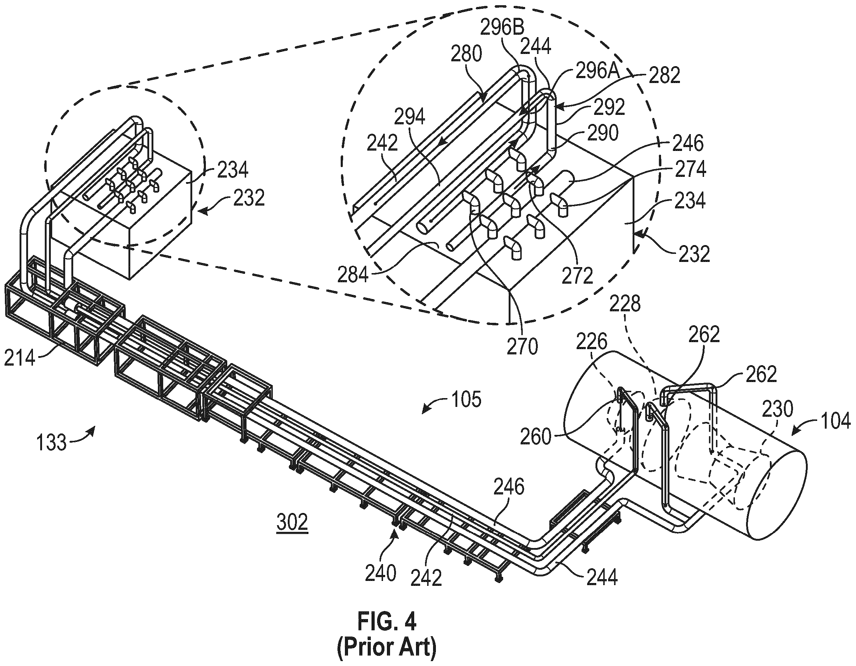

FIG. 4 shows a perspective view and a partial perspective view of another conventional piping layout 240 for a steam cycle circuit 133 for steam system 104 of a CCPP 105. CCPP 105 may be identical to CCPP 100 (FIG. 1) or CCPP 140 (FIG. 2), except for piping layout 240. In FIG. 4, the gas turbine system of CCPP 105 is not shown for clarity. In the illustrated embodiment, vertically oriented thermal expansion loops 260 and/or 262 are positioned in front of the steam turbine connections to the steam turbine system 104. Such loops 260, 262 are characterized with piping that extends vertically upward in relation to the floor, extends horizontally (e.g., parallel to the floor) for a relatively shorter distance, and extends vertically downward to the steam turbine connections. It should be noted that a raising of a gas turbine system intake (not shown) provides additional vertical clearance from the floor 302 for the vertically oriented thermal expansion loops 260 and/or 262.

As shown in FIG. 4, the piping layout 240 includes a first steam flow pipe 242 delivering steam from a steam generating source 232 (e.g., a HRSG 234) to a high pressure (HP) turbine section 226 of steam turbine system 104, and a second steam flow pipe 244 delivering steam from steam generating source 232 to an intermediate pressure (IP) turbine section 228 of steam turbine system 104. In the example shown in FIG. 4, a reheat steam pipe 246 may also deliver expanded steam from HP turbine section 226 of steam turbine system 104 to steam generating source 232 for reheating. The expanded steam carried in reheat steam pipe 246 can be referred to as cold reheat steam, and as such, the reheat steam pipe 246 can be referred to as a cold reheat steam pipe. As understood, reheat steam pipe 246 may not be necessary in all instances, e.g., where no IP turbine segment 228 is provided.

In contrast to the piping layout depicted in FIG. 3, the piping layout 240 of FIG. 4 does not include a thermal expansion loop on the portion of the piping on the civil structure 214 (i.e., a piping or pipe support rack). Instead, the piping layout 240 of FIG. 4 includes thermal expansion loops that are in the immediate vicinity of the HRSG 234 and the steam turbine system 104. As mentioned above, the piping layout 240 includes thermal expansion loops 260 and 262 that are positioned in the immediate vicinity of the steam turbine system 104 that extend vertically up and then vertically down to the steam turbine connections to form vertical oriented thermal expansion loops (i.e., the pipes extend at greater than a 45° angle relative to horizontal, which are in contrast to the horizontal thermal expansion loop 212 in FIG. 3). To this extent, the vertically oriented thermal expansion loops 260 and 262 in the first steam flow pipe 242 and second steam flow pipe 244, respectively, can connect with the steam turbine connections of the steam turbine system 104.

FIG. 4 further shows that the vertically oriented thermal expansion loops 260, 262 can include lengths of pipe that extend vertically farther than necessary to direct steam into the corresponding turbines via respective steam admission valves (not shown) located about the upper regions of the steam turbine sections. In addition, each first vertically oriented thermal expansion loop 260, 262 includes at least three sharp angle turns to form the U-shape of the loop. Although not clearly shown in FIG. 4, each of the U-shaped loops that form the vertically oriented thermal expansion loops 260, 262 are immediately upstream of the steam admission valve of the respective steam turbine section. To this extent, the first and second steam flow pipes 242, 244 enter steam admission valves of respective steam turbine sections (e.g., HP section and IP section) from vertically above the admission valves.

As shown in FIG. 4, each of first and second steam flow pipes 242, 244 fluidly couple to receive steam from steam generating source 232, e.g., an HRSG 234, at a respective outlet 270, 272, 274. In contrast to the piping layout in FIG. 3, first and second steam flow pipes 242, 244 in FIG. 4 include vertically oriented thermal expansion loops 280, 282 in at least one of first and second steam flow pipes 242, 244 in the immediate vicinity of the HRSG 234. The vertically oriented thermal expansion loops 280, 282 can include any length of steam flow pipe that extends in a manner to provide thermal expansion of steam therein. The loops 280, 282 are "vertically oriented" because they extend at greater than a 45° angle relative to horizontal (e.g., a horizontal top surface 284 of HRSG 234). Each vertically oriented thermal expansion loop 280, 282 is positioned immediately downstream from a respective outlet 270, 272 (272 also an inlet) of HRSG 234.

In the example of FIG. 4, each of the vertically oriented thermal expansion loops 280, 282 (labeled for only 282 for clarity) includes a first length of pipe 290 that extends away from a most direct path to steam turbine sections 226, 228, a second length of pipe 292 extending vertically therefrom, and a third length of pipe 294 that extends vertically above (aligned or offset from) first length of pipe 290 in a most direct path to steam turbine sections 226, 228. Collectively, the lengths of pipe 290, 292, 294 provide a thermal expansion loop 280, 282 with a U-shape where the pipes are vertical from one side of the HRSG to another side of the HRSG with horizontally extending sections in between with one of these sections in fluid communication with the HRSG connections.

FIG. 4 also shows that each of the vertically oriented thermal expansion loops 280, 282 includes at least two sharp-angled turns, e.g., 296A-B shown in portion 280, immediately downstream from a respective outlet 270, 272 of the HRSG.

As noted above, FIG. 4 shows that the first and second steam flow pipes 242, 244 are devoid of any thermal expansion loops between first and second vertically oriented thermal expansion loops 260, 262 and 280, 282 in regions of the piping layout 240 that is not within the immediate vicinity of the HRSG 232 and the steam turbine 104 (i.e., there are no thermal expansion loops on the civil structure 214). This is in contrast to the piping layout 200 depicted in FIG. 3 in which a large horizontal thermal expansion loop 212 is placed between the HRSG 232 and the steam turbine 104 outside of the immediate vicinity to which piping connects with these components.

The third steam flow pipe 246 as shown in FIG. 4 can be coupled to a reheat outlet of HP section 226 to deliver expanded steam (i.e., cold reheat steam) to steam generating source 132 (HRSG 234) for reheating the expanded steam therefrom. Third steam flow pipe 246 may follow a similar path as first and/or second steam flow pipes 242, 244. For example, as shown in FIG. 4, third steam flow pipe 246 starts vertically below HP section 226, e.g., because of the space freed by having first and second steam flow pipes 242, 244 enter steam system 104 from above as opposed to the piping layout 200 depicted in FIG. 3. Further, although not shown, the third steam flow pipe 246 may include a horizontally oriented thermal expansion loop in the immediate vicinity of the steam turbine 104. The horizontally oriented thermal expansion loop may include at least three sharp-angled turns immediately downstream of an outlet of HP section 226, similar to the horizontally oriented thermal loop portion in the immediate vicinity of LP section 230.

While particular schematic examples of a CCPP 100, 140 have been provided in FIGS. 1-4, it is understood that various alternative arrangements exist including, for example, less steam turbine sections 226, 228, 230. In another example, the CCPP (e.g., CCPP 140) can include a single shaft combined cycle plant where the main machine shaft line 144 is elevated to accommodate an above-ground underslung condenser 131 below the LP turbine section 130 (e.g., an above-ground water-cooled condenser).

Nonetheless, the steam cycle circuits depicted in the CCPPs of FIGS. 3 and 4 schematically illustrate how the piping layouts 200, 240 for these circuits can take up a large area within a CCPP 100, 140, and can be complex in their configurations due to the various thermal expansion loops used in the layouts to accommodate piping thermal expansion during operation of the CCPP, to lower loads on equipment, and to keep thermal stresses in the steam turbine system 104 in an allowable stress range.

In contrast to FIGS. 3 and 4, the various embodiments of the present disclosure provide an optimized piping layout for the main steam pipes in the steam cycle circuit of the CCPP. Unlike the piping layouts depicted in FIGS. 3 and 4, the optimized piping layout of the various embodiments does not include the use of long horizontal thermal expansion loops, vertical thermal expansion loops, or combinations of horizontal and vertical thermal expansion loops in the immediate vicinity of the connection points of the pipes with the steam turbine system and the HRSG of the CCPP, and/or on the main civil structure of the piping such as the piping support rack.

In one embodiment, an HP pipe can supply HP steam from the HRSG to a bottom portion of a HP steam admission valve (i.e., a bottom connection) that supplies the HP steam to the HP turbine section, while a hot reheat pipe can provide hot reheat steam from the HRSG to a side portion of at least one reheat steam admission valve (i.e., a side connection) for supply to an IP turbine section. This creates a "clearer" space on the operating floor, allows for easier maintenance provision for the generator rotor, and permits the use of shorter pipe lengths in the piping layout. For example, in some CCPP designs, equipment such as pumps can be located below the steam turbine. Eliminating the use of thermal expansion loops affords the piping layouts of the various embodiments with even more room for maintenance that can sometimes involve the use of a crane to access the pumps.

In one embodiment, sections of the HP pipe, cold reheat pipe, hot reheat pipe, and the LP pipe in the immediate vicinity of the HRSG can extend vertically and generally straight about a side region of the HRSG and run horizontally over a top region of the HRSG to connect therewith at corresponding connection points without any thermal expansion loops located about the top region of the HRSG.

The piping layout of the various embodiments further includes an elevated long horizontal pipe run from the HRSG to the steam turbine system to create enough space at ground level for personnel access and maintenance.

The elevated long horizontal pipe run along with bottom / side entry to certain turbine sections of the steam turbine system result in much shorter pipe lengths and economic routing of the piping between the HRSG and the steam turbine system.

In general, these features can result in a stiffer piping layout with reduced flexibility in comparison to the flexibility of the main steam lines (e.g., the HP steam pipe, the cold reheat pipe, the hot reheat pipe, and the LP steam pipe) that is achieved with long straight vertical and horizontal pipe sections in the area of HRSG and steam turbine system that is associated with the layouts of FIGS. 3 and 4. However, the various embodiments obviate any stiffness and flexibility issues with its piping layout by avoiding the introduction of large thermal expansion loops on the main steam lines and in the immediate vicinity of the HRSG and the steam turbine system. This results in long, straight sections in the piping that enable the embodiments described herein to achieve flexibility in the system. Further, the piping layouts of the various embodiments minimize changes in piping directions, such that any changes in piping direction exist only due to space constraints to accommodate other piping, equipment, structures, etc., or to meet process requirements.

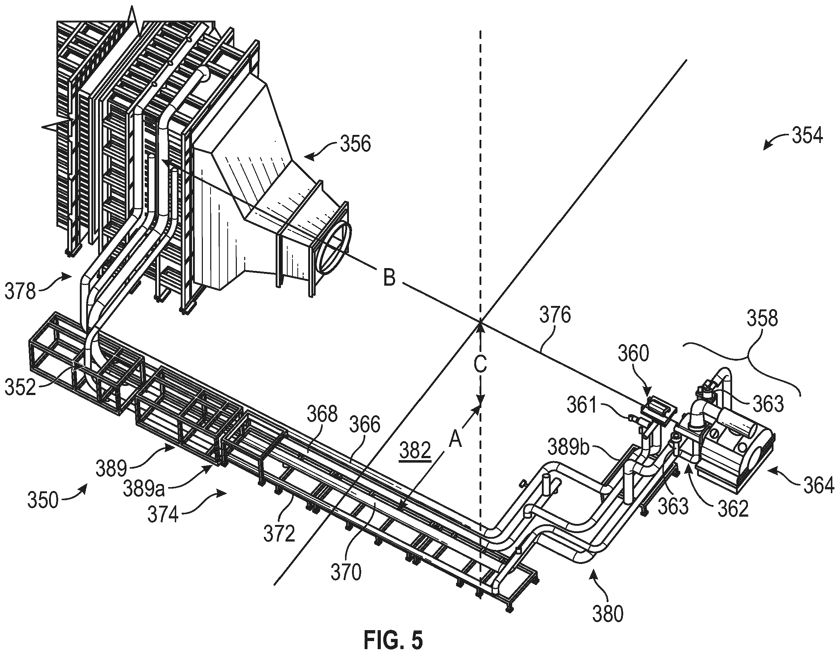

In addition, the flexibility in the piping layout of the various embodiments can be attained through other ways. For example, the use of elbow sections that couple other sections of the piping to the HRSG and the steam turbine system can assure maximum flexibility of the layout. Also, the horizontally extending sections of the main steam pipes can be moved laterally away from the centerline axis extending between the HRSG and the steam turbine system and have their corresponding connection points at the steam turbine system at a predetermined elevation off the floor of the CCPP, such that values related to these parameters can be harnessed to obtain optimum flexibility in a piping layout. For example, a ratio between the lateral offset of the main steam pipes from a horizontal distance extending between the connection points on the HRSG and the steam turbine system with respect to a delta in elevation of the piping at any certain location in a piping layout can be optimized to provide flexibility in the design of the layout. In one embodiment, as discussed below with respect to FIG. 5, a ratio of the lateral offset (A) of the main steam pipes to a delta in elevation (C) between the elevation of the pipes as supported by a main civil structure (e.g., piping or pipe support rack) and the elevation of the pipes at their connection points to the steam turbine system that is in the range of about 2.5 to about 3.5 can provide enough flexibility in the design of a piping layout that facilitates accommodation of horizontal thermal expansion of the straight piping section 374 and vertical thermal expansion of piping sections coming from the top of HRSG. In this manner, the piping layout can lower loads on equipment and keep thermal stresses in the steam turbine system in the allowable stress range.

Another ratio that relates to the positioning of the HRSG and the steam turbine system and the lateral offset of the main steam pipes that can be utilized to provide optimum flexibility in the design of a piping layout involves the horizontal distance between the connection points on the HRSG and the steam turbine system with respect to the lateral offset. In one embodiment, as discussed below in relation to FIG. 5, a ratio of the horizontal distance (B) extending between the connection points on the steam generating source and the steam turbine system to the lateral offset (A) of the main steam pipes that is in the range of about 2.0 to about 3.0 can provide enough flexibility in the design of a piping layout that facilitates accommodation of horizontal thermal expansion of the straight piping section 374 and vertical thermal expansion of piping sections coming from the top of HRSG. In this manner, the piping layout can lower loads on equipment and keep thermal stresses in the steam turbine in an allowable stress range.

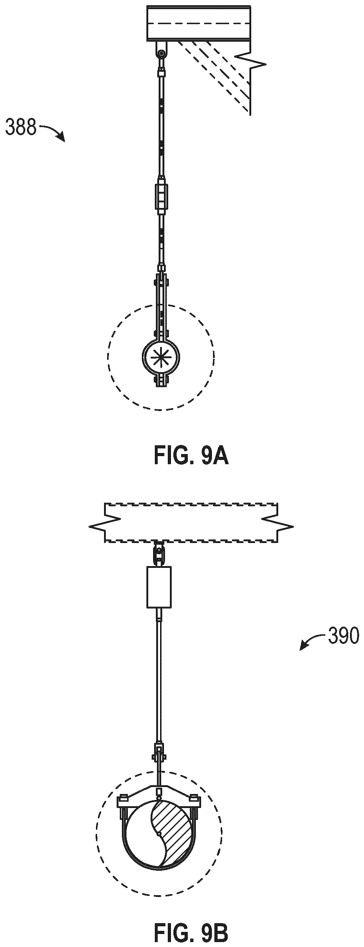

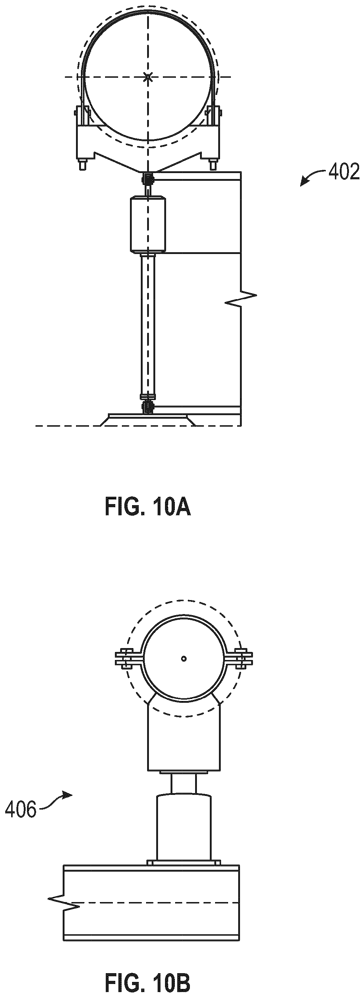

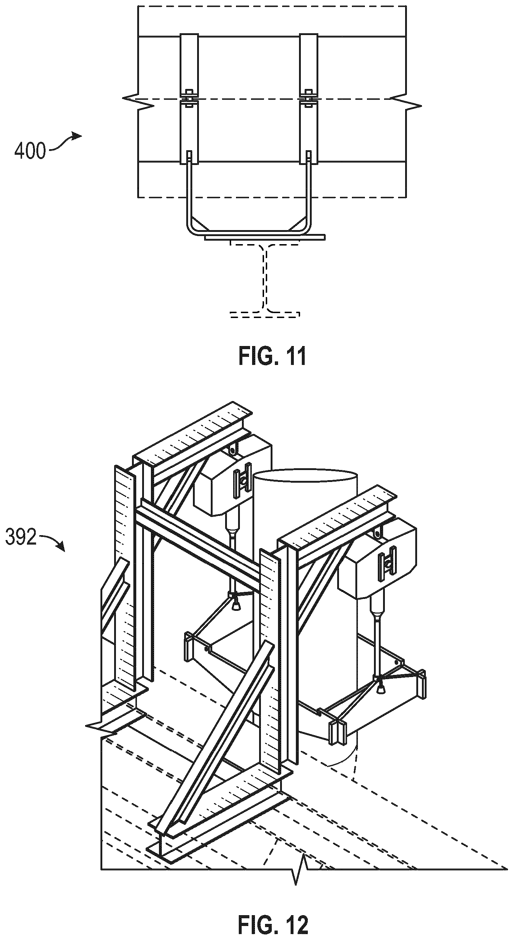

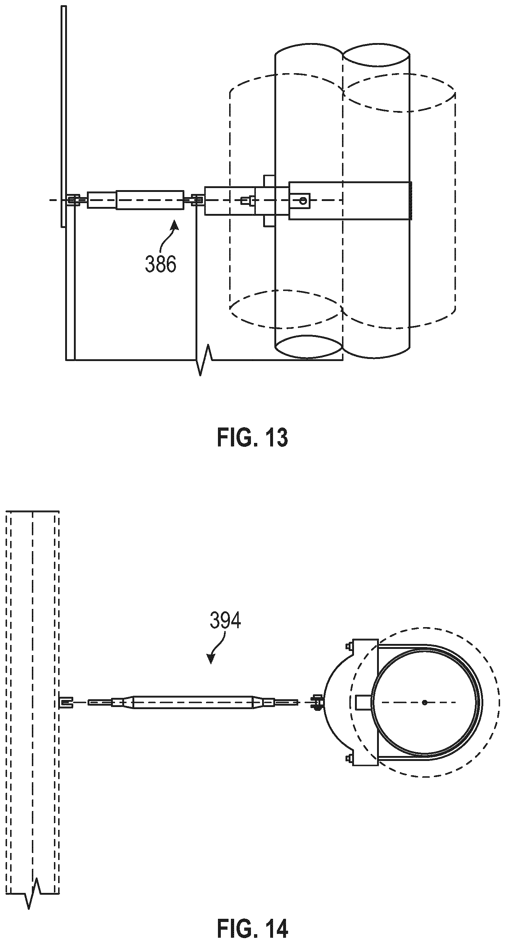

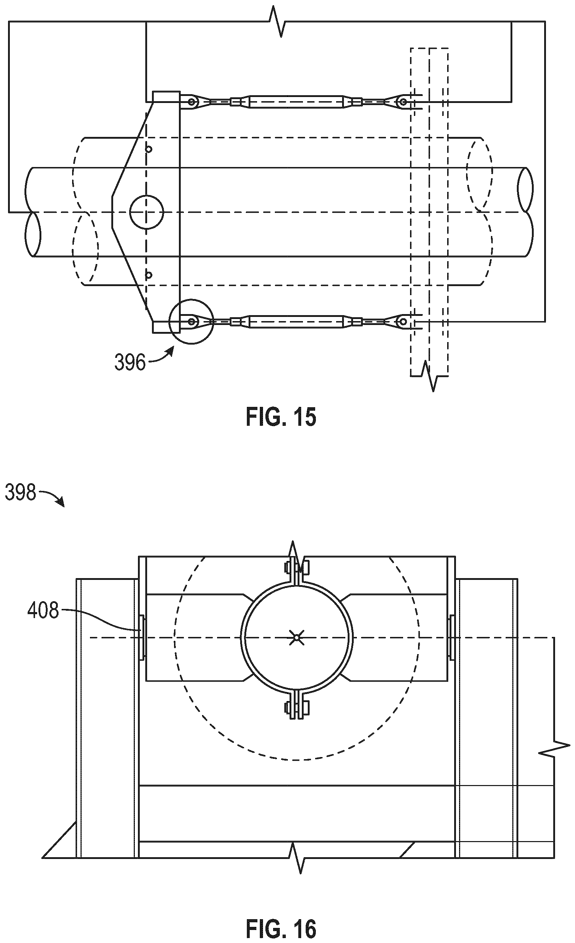

Also, the various embodiments can utilize a combination of a plurality support structures located about the main steam pipes including the civil structure and a plurality of piping supports (e.g., piping support hardware) located on the civil structure to support various sections of the piping, in order to help accommodate piping thermal expansion during operation, to lower loads on equipment piping, and to keep piping thermal stresses in the steam turbine piping system in an allowable stress range. The piping support can include a combination of piping support hardware selected from the group consisting of suspension supports (e.g., hangers, as in FIGS. 9A, 9B, 12), rigid struts (FIGS. 14, 15), bottom-positioned pipe supports (FIG. 11) with friction reduction plates, pipe guide structures (FIG. 16), shock absorbers (FIG. 13), and variable spring supports and angulating variable spring supports (FIGS. 10B, 10A). In addition, the piping support can also include piping support steel (i.e., small and short steel sections / structures) which are often needed to connect the piping support hardware to the main civil structure (e.g., the piping support rack).

In one embodiment, a rigid strut that can provide axial restraint can be applied on the civil structure at the end of the civil structure close to the steam turbine system. To this extent, the axial restraint that is provided by the rigid strut can push the thermal expansion to the HRSG to be absorbed by the vertical drop from HRSG, all while exerting minimal forces and moments on steam turbine connections and nozzles, thereby protecting the steam turbine system.

Per the various embodiments of the disclosure, the routings of the piping through various structures that can form the civil structure can utilize the support or suspension features provided with the various piping support in the most advantageous way. For example, the use of a rigid strut that provides axial restraint can be applied in a manner that avoids friction forces and reduces loads on steam turbine nozzle connections. In a scenario in which bottom-positioned pipe supports are deployed, friction reduction plates can be utilized. With regard to the usage of suspension supports (e.g., a constant spring hanger, a variable spring hanger, and a constant hanger) and rigid struts (e.g., struts that provide axial restraint and lateral restraint), the lengths of these components can be considered and placed strategically to account for the swinging of the piping due to thermal expansion. In regard to the usage of guide structures to route the piping, the gaps associated with these structures can be optimized through detailed analysis to get more precise results of the piping layout with regard to handling forces, loads, and thermal stresses that are expected to arise in the system.

FIG. 5 shows a perspective view of a piping layout 350 for steam flow pipes in a steam cycle circuit 352 of a CCPP 354 having a steam generating source 356 (e.g., an HRSG) and a steam turbine system 358 according to an embodiment of the present disclosure. As noted above with other descriptions of a CCPP, the CCPP 354 can include a gas turbine system that operates in conjunction with the steam generating source 356 and the steam turbine system 358. For purposes of clarity, the gas turbine system of CCPP 354 is not depicted in FIG. 5. However, it is understood that the gas turbine system of the CCPA 354 can include a compressor, a combustor, and a gas turbine. The compressor and the gas turbine are coupled via a common shaft.

As noted above with other descriptions of a CCPP, the steam turbine system 358 of the CCPP 354 can include one or more steam turbine sections or segments. For example, the steam turbine system 358 can include an HP section 360, an IP section 362 and an LP section 364. Although not shown for purposes of clarity, each section 360, 362, 364 includes a plurality of rotating blades mechanically coupled to a shaft, which rotate the shaft based on the steam flow thereover. In addition, the steam turbine system 358 includes a condenser (e.g., a lateral condenser arrangement, an above-ground underslung condenser (not illustrated for clarity)) operably coupled to the LP steam turbine section 364.

The steam generating source 356, which can include an HRSG, is configured to direct steam through steam flow pipes of the steam cycle circuit 352 to enter respective inlet(s) of the HP section 360, the IP section 362 and/or the LP section 364. Steam from the HRSG 356 that is conveyed to the steam turbine system 358 via the piping layout 350 of the steam cycle circuit 352 is channeled within the system to impart a force on blades causing the shaft to rotate, which in turn can drive an additional load such as another generator to produce additional electric power (e.g., generator 122 of FIG. 1).

The CCPP 354 of FIG. 5 can take the form of a single shaft CCPP (depicted schematically as CCPP 140 of FIG. 2) where in one embodiment the main machine shaft line (e.g., shaft 144) is elevated to accommodate an above-ground underslung condenser (not shown for clarity) below the LP turbine section (e.g., an above-ground water-cooled condenser). The piping layout 350 is preferable in one embodiment for a single shaft CCPP with an elevated machine shaft line because this type of CCPP can avoid the use of thermal expansion loops in the main steam paths in the immediate vicinity of the HRSG 356 and the steam turbine system 358. While the piping layout 350 of the steam cycle circuits of the various embodiments is described with respect to a single shaft CCPP with an elevated main machine shaft line that can accommodate an above-ground underslung condenser below the LP turbine section 364, it is understood that the piping layouts of the embodiments can have applicability with any of a variety of alternative CCPP arrangements.

The piping layout 350 of the steam cycle circuit 352 of the CCPP 354 depicted in FIG. 5 can include a first steam pipe 366 to provide a first supply of main steam from the steam generating source 356 to a first turbine section of the steam turbine system 358 via a first steam admission valve at a first steam pressure. In one embodiment, the first steam pipe 366 is a HP steam pipe that provides a supply of HP steam from the steam generating source 356 to the HP turbine section 360 of the steam turbine system 358 via a steam admission valve 361. To this extent, the HP steam admission valve 361 is configured to have a bottom portion that makes a bottom connection with HP steam pipe 366 to receive the HP steam for supply to the HP turbine section 360.

The piping layout 350 of the steam cycle circuit 352 of the CCPP 354 depicted in FIG. 5 can further include a cold reheat steam pipe 368 to supply cold reheat steam exhausted from the first turbine section (i.e., the HP turbine section 360) to the steam generating source 356 for reheating thereof. Specifically, the cold steam to be reheated is mixed with higher temperature steam in the steam generating source 356 to produce hot reheat steam.

FIG. 5 shows that the piping layout 350 can further include a hot reheat steam pipe 370 to supply hot reheat steam to a second turbine section of the steam turbine system 358 via at least one reheat steam admission valve at a second steam pressure. In one embodiment, the hot reheat steam pipe 370 is configured to supply the hot reheat steam produced in the steam generating source 356 to the IP turbine section 362 of the steam turbine system 358 via at least one reheat steam admission valve 363 at an intermediate pressure. In one embodiment, the at least one reheat steam admission valve 363 is configured to receive the hot reheat steam at a side portion thereof for introduction of the hot reheat steam to a side portion of the IP turbine section 362. Although it is preferrable to have the HP steam admission valve 361 and the at least one reheat steam admission valves 363 make a bottom connection and a side connection with the HP steam pipe and the hot reheat steam pipe, respectively, in order to add flexibility into the piping layout, it is understood that these admission valves can be configured with other connection configurations (e.g., from the top).

The piping layout 350 of the steam cycle circuit 352 of the CCPP 354 as depicted in FIG. 5 also can include a second steam pipe to provide a second supply of main steam from the steam generating source 356 to a third turbine section of the steam turbine system 358 via at least one third steam admission valve at a third steam pressure. In one embodiment, the second steam pipe is a LP steam pipe 372 that is configured to provide a supply of LP steam from the steam generating source 356 to the LP turbine section 364 of the steam turbine system 358 via at least one LP steam admission valve (not shown) at a low pressure.

As shown in the piping layout 350 depicted in FIG. 5, each of the first steam pipe 366 (i.e., HP steam pipe), the cold reheat steam pipe 368, the hot reheat steam pipe 370, and the second steam pipe 372 (i.e., LP steam pipe) can include a long horizontally extending straight section 374 that is parallel to a centerline or power train axis 376 extending between the steam generating source 356 and the steam turbine system 358. At a first end of the long horizontally extending straight section 374, each of the main steam pipes (pipes 366, 368, 370, 372) can include a first turn section 378 that extends generally straight towards a side region of the steam generating source 356. The main steam pipes of the piping layout 350 depicted in FIG. 5 can further include a second turn section 380 at a second end of the long horizontally extending straight section 374 opposing the first end, such that the second turn section 380 extends towards a side region of the steam turbine system 358.

As shown in FIG. 5, between the second turn section 380 of each of the first steam pipe (i.e., HP steam pipe 366), the cold reheat steam pipe 368, the hot reheat steam pipe 370, and the second steam pipe (i.e., LP steam pipe 372) and the steam turbine system 358, each of these main steam pipes can be configured to undergo an elongation in the piping (i.e., the piping becomes longer). Those skilled in the art will appreciate such features can exist in a layout due to space constraints to accommodate other piping, equipment, structures, etc., or process requirements. This elongation of the piping that is shown in the piping layout 350 of FIG. 5 does not equate with a thermal expansion loop that can overtake piping thermal expansion. In one embodiment, this elongation of the first steam pipe (i.e., HP steam pipe 366), the cold reheat steam pipe 368, the hot reheat steam pipe 370 and the second steam pipe (i.e., LP steam pipe 372) is located in the immediate vicinity of the second turn section 380 of each of the pipes, away from a connection point of each of the respective pipes with the steam turbine system 358.

In one embodiment as shown in FIG. 5, the elongation of each of the first steam pipe (i.e., HP steam pipe 366), the cold reheat steam pipe 368, the hot reheat steam pipe 370, and the second steam pipe (i.e., LP steam pipe 372) can be horizontally offset from the corresponding portions of the pipes that extend towards the steam turbine system 358. It is understood that the elongation of the main steam piping can occur in other locations, which will depend on the constraints associated with the layout, as well as the other components that need to be accommodated.

One feature of the piping layout 350 of the steam cycle circuit 352 of the CCPP 354 is that the long horizontally extending straight section 374 of each of the first steam pipe (i.e., HP steam pipe 366), the cold reheat steam pipe 368, the hot reheat steam pipe 370, and the second steam pipe (i.e., LP steam pipe 372) can be positioned at a predetermined elevation above a floor 382 of the CCPP. In one embodiment, the predetermined elevation can be greater than 5.0 meters above the floor 382. In a more particular embodiment, the predetermined elevation can be around 6.5 meters above the floor.

Although the various embodiments do not utilize thermal expansion loops in the immediate vicinity of the HRSG and steam turbine and about the piping that extends between the HRSG and the steam turbine system, as shown in the conventional systems of FIGS. 3 and 4, the accommodation of the thermal expansion occurs in the present piping layouts by optimizing the location of certain features in the piping system. These locations pertain to the lateral offset distance between the long horizontally extending straight section 374 of each of the main steam pipes and a horizontal distance extending along the centerline axis 376 between the connection points on the HRSG 356 and the steam turbine system 358. As shown in FIG. 5, reference element "B" represents the horizontal distance separating the connection points on the HRSG 356 and the steam turbine system 358, while reference element "A" represents the lateral offset distance of the main steam pipes from B. A delta in elevation between the elevation of the main steam pipes as supported by a civil structure 389 and the elevation of the steam pipes at their corresponding connection points with the steam turbine system 358 is depicted in FIG. 5 by reference element "C."

In general, the length of the horizontally extending straight section 374 of piping correlates directly with the piping thermal expansion that needs to be compensated for, with longer straight sections requiring greater accommodation. The lateral offset distance A of the long horizontally extending straight section 374 of each of the main steam pipes from the centerline axis 376 extending between the connection points on the HRSG and steam turbine system (B) and the elevation (C) of the piping about the steam turbine connections are features that factor in compensating for piping thermal expansion.

Since the distance that separates the HRSG 356 and the steam turbine system 358 is generally fixed, the lateral offset distance A and the delta in elevation C of the steam piping connections at the steam turbine system 358 are features that can be adjusted to compensate for piping thermal expansion. In one embodiment, a ratio between the lateral offset distance A of the main steam pipes from the horizontal distance B extending between the connection points on the HRSG 356 and the steam turbine system 358 and the delta in elevation C of the steam turbine connections (i.e., the ratio of A to C) can be optimized to provide flexibility in the design of a piping layout. For example, a ratio of the lateral offset distance A of the steam pipes from the horizontal distance B extending between the connection points on the HRSG 356 and the steam turbine system 358 to the delta in elevation C between the elevation of the pipes on the civil structure 389 and the elevation of pipes at their corresponding connections to the steam turbine 358 (i.e., a ratio of A to C) in the range of about 2.5 to about 3.5 can provide enough flexibility in the design of a piping layout to facilitate accommodation of horizontal thermal expansion of the piping sections from the steam turbine connections to the civil structure 389. In this manner, the piping layout can lower loads on steam turbine equipment and keep thermal stresses in the steam turbine system in an allowable stress range. Basically, with longer vertical pipe sections (from the steam turbine connections to the civil structure 389 supporting elevation), it is easier to achieve allowable loads on the steam turbine connections and to avoid piping loops in front of the connections to the steam turbine system.

Another ratio that relates to the positioning of the HRSG 356 and the steam turbine system 358 and the piping that can be utilized to provide optimum flexibility in the design of a piping layout involves the horizonal distance B between the connection points on the HRSG and the steam turbine system 358 and the lateral offset of the piping A from horizontal distance B. For example, in one embodiment, a ratio of the horizontal distance B between the connection points on the HRSG and the steam turbine system to the lateral offset A of the piping (i.e., the ratio of B to A) that is in the range of about 2.0 to about 3.0 can provide enough flexibility in the design of a piping layout that facilitates accommodation of horizontal thermal expansion of the straight piping section 374 and vertical thermal expansion of piping sections coming from the top of HRSG 356. In this manner, the piping layout can lower loads on HRSG equipment and keep thermal stresses in the steam turbine piping system in an allowable stress range. Basically, the longer the straight pipe sections 374 are, the bigger horizontal offset A between centerline 376 (distance B) and piping on the civil structure 389 is required.

In one embodiment, in which an above-ground, underslung condenser is utilized as the condenser 131, the elevation of the piping on the civil structure 389 and the elevation of the piping at the connection points of the steam turbine system 358 can be optimized to aid in accommodating thermal expansion in the piping layout. For example, in one embodiment, having the elevation of the high pressure steam pipe 366, the cold reheat steam pipe 368, the hot reheat steam pipe 370, and the low pressure steam pipe 372 at the connection points of the steam turbine system 358 greater than average piping elevations of the high pressure steam pipe, the cold reheat steam pipe, the hot reheat steam pipe, and the low pressure steam pipe on the civil structure 389 will accommodate thermal expansion and give flexibility to the layout that is not provided in the layouts depicted in FIGS. 3 and 4.

FIG. 5 shows another feature of the piping layout 350 of the steam cycle circuit 352 of the CCPP 354 can include having sections of the first steam pipe (i.e., HP steam pipe 366), the cold reheat steam pipe 368, the hot reheat steam pipe 370, and the second steam pipe (i.e., LP steam pipe 372) in the immediate vicinity of the steam generating source 356 extend vertically and generally straight about a side region of the steam generating source 356.

As shown in FIG. 5, selected sections of the first steam pipe (i.e., HP steam pipe 366), the cold reheat steam pipe 368, the hot reheat steam pipe 370, and/or the second steam pipe (i.e., LP steam pipe 372) can run horizontally over a top region of the steam generating source 356. In one embodiment, the HP steam pipe 366 and the hot reheat steam pipe 370 can run horizontally over a top region of the steam generating source 356 and connect fluidly with the steam generating source 356 at corresponding connection points, while the cold reheat steam pipe 368 and the LP steam pipe 372 can connect fluidly with connection points on a side region of the steam generating source 356. In this embodiment, no thermal expansion loops are located about the top region and side region of the steam generating source.

The optimized piping layout 350 of the steam cycle circuit 352 of the CCPP 354 also is without any thermal expansion loops in the immediate vicinity of any of the turbine sections of the steam turbine system 358. In particular, as shown in FIG. 5, sections of the first steam pipe (i.e., HP steam pipe 366), the cold reheat steam pipe 368, the hot reheat steam pipe 370, and the second steam pipe (i.e., LP steam pipe 372) in the immediate vicinity of the HP turbine section 360, the IP turbine section 362, and the LP turbine section 364 can connect with corresponding connection points in the steam turbine system 358 without use of any thermal expansion loops in the pipes located about these turbine section connection points.

As mentioned above, the optimized piping layout of the various embodiments can include the use of a combination of a plurality of structures located about the main steam pipes to support various sections of the piping. To this extent, the structures help in accommodating piping thermal expansion during operation of the CCPP, in lowering loads on equipment piping, and in keeping thermal stresses in the steam turbine piping system in an allowable stress range. In one embodiment, the structures can include the civil structure 389 that is configured to support the sections of the first steam pipe (i.e., HP steam pipe 366), the cold reheat steam pipe 368, the hot reheat steam pipe 370, and the second steam pipe (i.e., LP steam pipe 372) that extend between the steam generating source 356 and the steam turbine system 358. As shown in FIG. 5, the civil structure 389 can take a form that is similar to the structure 214 depicted in FIGS. 3 and 4. In one embodiment, the civil structure 389 can include a first civil structure 389a to support the first steam pipe (i.e., HP steam pipe 366), the cold reheat steam pipe 368, the hot reheat steam pipe 370, and the second steam pipe (i.e., LP steam pipe 372) about the long horizontally extending straight section 374, and a second civil structure 389b to support the sections of the first steam pipe (i.e., HP steam pipe 366), the cold reheat steam pipe 368, the hot reheat steam pipe 370, and the second steam pipe (i.e., LP steam pipe 372) that extend from the second turn section 380 to the steam turbine system 358.

In one embodiment, the first civil structure 389a that supports the long horizontally extending straight sections 374 of the main steam pipes (i.e., the HP steam pipe 366, the cold reheat steam pipe 368, the hot reheat steam pipe 370, and the LP steam pipe 372) can be positioned at a predetermined lateral offset from the horizontal distance separating the connection points on the HRSG 356 and the steam turbine system 358. In one embodiment, the predetermined lateral offset from the horizontal distance separating the connection points can be positioned in relation to the delta in elevations C of the piping (e.g., the elevation of the piping as supported by the civil structure (e.g., first civil structure 389a) and the elevation of the piping at the steam turbine connections) and/or the horizontal distance between the HRSG 356 and the steam turbine system 358 in a manner that facilitates satisfaction of one or both of the aforementioned ratios (i.e., ratio A to C and ratio B to A).

In one embodiment, the second civil structure 389b that supports the sections of the main steam pipes that extend from the second turn section 380 to the steam turbine system 358 can comprise one or more axial restraints located at an end of the second pipe rack close to the steam turbine system. To this extent, the one or more axial restraints can be configured to push thermal expansion of the first steam pipe (i.e., HP steam pipe 366), the cold reheat steam pipe 368, the hot reheat steam pipe 370, and the second steam pipe (i.e., LP steam pipe 372) towards the steam generating source 356 for absorption in the sections of the pipes in the immediate vicinity of the steam generating source 356 that extend vertically about the side region of the HRSG 356. In addition, the one or more axial restraints in the second civil structure 389b, which can be located about the end (steam turbine side) of the piping, are further configured to exert minimal forces and moments on steam turbine connections and nozzles in the turbine sections of the steam turbine system 358. As used herein, "to exert minimal forces and moments" means to have loads (forces and moments) on the equipment connections (e.g., in a large bore steam system such as the steam turbine, HRSG and condenser) that are in the allowable limits defined by an equipment manufacturer.

In addition to the use of a civil structure, the piping layout 350 of the steam cycle circuit 352 of the CCPP 354 depicted in FIG. 5 can include the use of other piping support (e.g., piping support hardware). This piping support can be in combination with the civil structure 389, and in particular, the aforementioned first civil structure 389a and the second civil structure 389b. In one embodiment, a combination of a plurality of piping supports can be located about the first civil structure 389a and the second civil structure 389b to support various sections of the first steam pipe (i.e., HP steam pipe 366), the cold reheat steam pipe 368, the hot reheat steam pipe 370, and the second steam pipe (i.e., LP steam pipe 372) in the civil structure 389. A combination of types of piping supports for the plurality of piping supports can be selected from the group consisting of suspension supports (e.g., hangers, as in FIGS. 9A, 9B, 12), rigid struts (FIGS. 14, 15), bottom-positioned pipe supports (FIG. 11), guide structures with gaps formed therein to accommodate the routing of the piping (FIG. 16), shock absorbers (e.g., snubbers) (FIG. 13), variable spring supports (FIG. 10A), and angulating variable spring supports (FIG. 10B). An illustrative list of suspension supports (e.g., hangers) can include, but are not limited to, a constant spring hanger 388 (FIG. 9A), a variable spring hanger 390 (FIG. 9B), and a constant hanger 392 (FIG. 12). The rigid struts can include, but are not limited to, struts 394 that provide lateral restraint (FIG. 14) and struts 396 that provide axial restraint (FIG. 15). In one embodiment, the bottom-positioned pipe supports 400 (FIG. 11) can be configured with friction reduction plates that are configured to reduce friction forces in the piping system, which will help in reducing loads on steam turbine and other equipment nozzle connections in the steam turbine system 358. Also, the use of friction reduction plates with the bottom-positioned pipe supports 400 will aid in reducing the piping loads on the main civil structure (e.g., the piping support rack).

It is understood that the aforementioned piping supports are only illustrative of a few examples of supports that can be used with the piping layout of the various embodiments. Those skilled in the art will appreciate the use of other piping supports are possible. Examples of other piping supports can include, but are not limited to, sway braces.

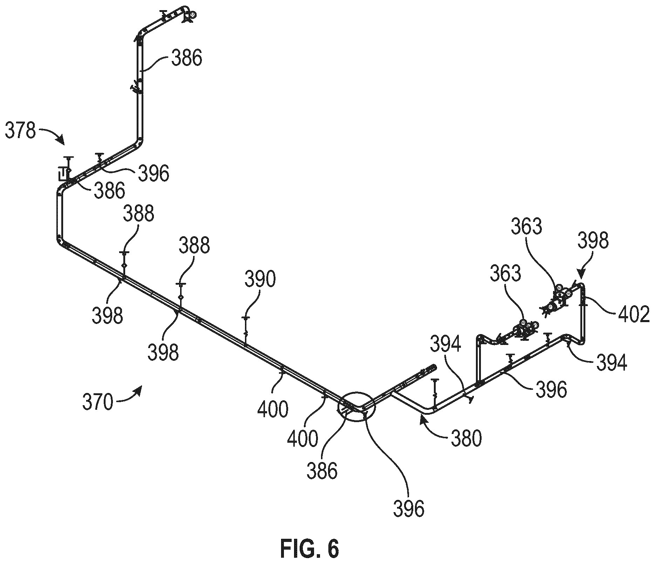

Examples of arrangements of various combinations of the aforementioned piping supports are illustrated in FIGS. 6, 7 and 8. In particular, FIG. 6 shows a detailed perspective view of the hot reheat steam pipe 370 from the piping layout depicted in FIG. 5 with an example arrangement of piping support located between the steam generating source 356 and the IP section 362 of the steam turbine system 358. Note that both the steam generating source 356 and the IP section 362 of the steam turbine system 358 are not disclosed in FIG. 6 for purposes of clarity but may be understood with reference to FIG. 5. In the example depicted in FIG. 6, the hot reheat steam pipe 370 can include a shock absorber 386 such as a snubber located at the interface of the steam generating surface 356 (e.g., about the vertical sections of the piping adjacent a side of the HRSG). A shock absorber 386 such as a snubber is well-known to those skilled in the art and is generally used to stop movement caused by sudden transient loads in a piping system. FIG. 13 shows a schematic view of an example of a shock absorber 386 and its components that can be deployed to restrain movements of a pipe.

FIG. 6 shows that a shock absorber 386 can be configured about first turn section 378 of long horizontally extending straight section 374 of the main steam pipes as illustrated in FIG. 5. Regardless of the location at which the shock absorber 386 is disposed, it is understood that the shock absorber 386 can be coupled to the hot reheat steam pipe 370 at one end and at another end to a surface, such as for example, a pipe rack or wall of the HRSG to facilitate the restraint of the pipe. The coupling of the shock absorber 386 to these other surfaces are not depicted in FIG. 6 for sake of clarity. Such coupling to a pipe rack or wall is represented in FIG. 13.

FIG. 6 also shows that the hot reheat steam pipe 370 can be configured with piping support that includes suspension supports (e.g., hangers) that can steady and support pipes. To this extent, the suspension supports (e.g., hangers) can reduce loads on equipment and simultaneously assure reliable behavior of a piping system in operating conditions (especially in case of large horizontal thermal displacement).

For example, FIG. 6 shows that the hot reheat steam pipe 370 is supported by a combination of constant spring hangers 388 and variable spring hangers 390. Both constant spring hangers and variable spring hangers are well known to those skilled in the art of configuring piping layouts for CCPPs. In general, spring hangers can have a spring mechanism that allows the pipe to move in a vertical direction while still providing support. The spring mechanism can either be variable or constant, depending on the application. Variable spring hangers work on the principle that the support load remains relatively constant while the pipe moves. Thus, as the pipe moves due to thermal expansion or contraction, the spring of the variable spring hanger compresses or expands to accommodate the vertical movement to maintain the support. On the other hand, constant spring hangers maintain a nearly constant supporting force over the entire travel range of the support. This is usually accomplished by a mechanical system within the support that compensates for the changing spring force as the hanger moves. FIGS. 9A and 9B show schematic views of a rigid hanger 388 and a variable spring hanger 390, respectively, that can be deployed as part of piping support in a piping layout such as those depicted in FIGS. 6, 7 and 8.

FIG. 6 shows that the constant spring hanger 388 and the variable spring hanger 390 can be disposed about the hot reheat steam pipe 370 in a variety of locations between the steam generating source 356 and the IP section 362 of the steam turbine system 358. These locations are only illustrative and not meant to be limiting as those skilled in the art will appreciate that piping simulation and flexibility analysis can assist in determining locations that best serve a particular layout in a CCPP configuration. Further, the number of suspension supports (e.g., hangers), as well as their locations and lengths in the piping layout, will depend on the sensitivity of the piping and the design of the CCPP, and thus these variables can all be considered such that the suspension supports are placed strategically to account for the swing due to thermal expansion.

It is understood that the constant spring hangers 388 and variable spring hangers 390 are representative of only a few examples of suspension supports that can be used to support the main steam pipes in the piping layout of the steam cycle circuits of the various embodiments. A constant hanger 392 like that depicted in FIG. 12 can be deployed as piping support for a vertical pipe section in a piping layout according to an embodiment (not shown in FIG. 6). Other supports can include, but are not limited to, clevis hangers, riser clamps, band hangers, split ring hangers, roller hangers, and the like.

As shown in FIG. 6, the hot reheat steam pipe 370 can be configured with other piping support such as rigid struts that can restrain pipe displacement during any type of dynamic event occurring in the CCPP, such as piping thermal expansion and loads on the equipment in the various systems of the CCPP. In general, rigid struts provide a rigid connection between the piping and supporting structure (i.e., the pipe rack). To this extent, the rigid struts can assist in controlling the pipe behavior and assure reliability of the support in operating conditions.

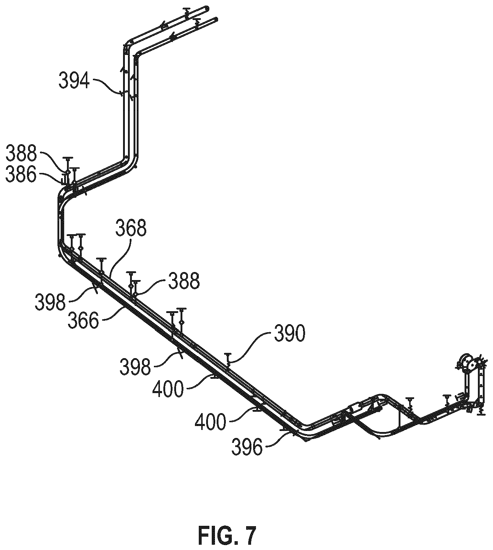

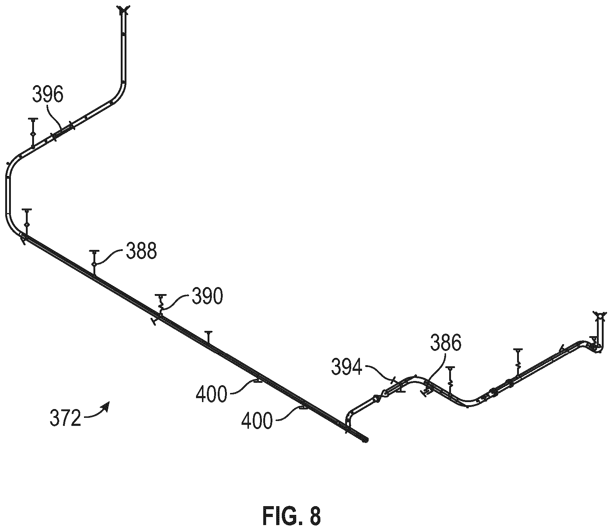

As shown in FIG. 6, the hot reheat steam pipe 370 can be supported by a combination of rigid struts 394 that provide lateral restraint and rigid struts 396 that provide axial restraint. The rigid struts 394 and 396 are also depicted in use with the other main steam pipes illustrated in FIGS. 7 and 8.

Although not shown in FIG. 6, 7, or 8, for purposes of clarity, the struts 394 and 396 can attach to the main steam pipes (e.g., the hot reheat steam pipe 370) and any surrounding structure (e.g., the support rack) to restrain movement of the piping. Both rigid struts that provide lateral restraint and rigid struts that provide axial restraint are well known to those skilled in the art of configuring piping layouts for CCPPs. FIG. 14 shows a schematic view of a rigid strut 394 that may be deployed as a piping support to provide lateral restraint in a piping layout, while FIG. 15 shows a schematic view of a rigid strut 396 that may be deployed as a piping support to provide axial restraint in a piping layout. As noted previously, having axial restraint can be beneficial to the piping layout because it can push thermal expansion of the piping section 374 in HRSG scope.

The rigid struts 394 and 396 can be disposed about the hot reheat steam pipe 370 in a variety of locations between the steam generating source 356 and the IP section 362 of the steam turbine system 358. In one embodiment as shown in FIG. 6, the rigid struts 394 and 396 can be disposed at a location that is closer to the steam turbine system 358. By having a rigid strut 396 that provides axial restraint of the hot reheat steam pipe 370 at this location with the support rack, this axial restraint can push any thermal expansion to the steam generating source 356 (HRSG) to be absorbed by the long vertical drop of the piping from HRSG and the horizontal offset section. Further, this configuration of the rigid strut 396 that provides axial restraint will exert minimal forces and moments on steam turbine connections and nozzles, thereby protecting the steam turbine system 358. An advantage of having the rigid strut 396 that provides axial restraint and a rigid strut 394 that provides lateral restraint at the locations depicted in FIG. 6 is that they can avoid friction forces and reduce loads on steam turbine nozzle connections.

Although the locations of the rigid struts 394 and 396 are depicted in FIG. 6, as well as FIGS. 7 and 8, near the steam turbine system 358 and close to the interface with the HRSG 356, it is understood that these struts can be disposed in other locations. Thus, the configurations of the rigid struts 394 and 396 depicted in FIGS. 6, 7 and 8 are not meant to be limiting.

Those skilled in the art will appreciate that the number of the rigid struts 394 and 396 that are disposed with the main steam paths can vary. In general, the number of rigid struts 394 and 396, as well as their locations and lengths in the piping layout will depend on the CCPP and the flexibility of the piping layout, and thus these variables can all be considered such that the piping supports are placed strategically to account for the swing due to thermal expansion.

FIG. 6 shows that pipe guides 398 are other piping support structures that can be used to support the hot reheat steam pipe 370, as well as the other main steam pipes depicted in FIGS. 7 and 8. In general, guides are supports which consist of piping support hardware (clamp), which does not have a fixed connection to surrounding structures. Instead, there is a gap between the clamp and the (steel) guides, which allows limited movement of the piping system in the direction of the guides. Once when the gap is consumed due to thermal expansion of the piping system, then a friction force appears and acts opposite to pipe movements. FIG. 16 shows a schematic view of a pipe guide structure 398 with a gap 408 that can be deployed as piping support in a piping layout of the various embodiments. With the use of the pipe guides 398 in the piping layout, the (lateral) guides can essentially control lateral pipe movement.

As shown in FIG. 6, the pipe guides 398 can be disposed about the hot reheat steam pipe 370 along the horizontally extending straight section 374 of the main steam pipes (FIG. 5). FIGS. 7 and 8 show the pipe guides 398 disposed about similar locations on the HP steam pipe 366 and the cold reheat steam pipe 368, and the LP steam pipe 372, respectively. Although the pipe guides 398 are depicted along the horizontally extending straight section 374 of the main steam pipes, it is understood that the guides can be located in a variety of locations between the steam generating source 356 and the steam turbine system 358. In addition, it is understood that the gaps in the pipe guides that are formed between the guide bodies and the guides can be optimized by those skilled in the art by using known simulation and analysis software applications (e.g., stress and load analysis) that assist in yielding more precise results that are tailored to the specific piping layout and CCPP. To this extent, optimized gaps in the pipe guide will facilitate a reduction in both stresses in the piping layout and loads on steam turbine connections and nozzles in the steam turbine system.

FIG. 6 shows that bottom-positioned pipe supports 400 or base supports are other piping supports that can be used to support the hot reheat steam pipe 370, as well as the other main steam pipes like the HP steam pipe 366 and the cold reheat steam pipe 368 depicted in FIG. 7, and the LP steam pipe 372 shown in FIG. 8. In general, bottom-positioned pipe supports are supports that are located underneath the piping to provide support from below the piping. FIG. 11 shows a schematic view of a bottom-positioned rigid pipe support 400 that can be deployed as part of piping support in a piping layout in any of the various embodiments.

As shown in FIGS. 6, 7 and 8, the bottom-positioned rigid pipe support 400 can be placed in a variety of locations. Typically, the bottom-positioned rigid pipe supports 400 can be added to straight pipes, elbows or transition sections where little to no movement is foreseen. It is understood that the locations of the bottom-positioned rigid pipe supports 400 in the embodiments depicted in FIGS. 6, 7 and 8 are illustrative of possible locations in a piping layout and are not meant to be limiting.

In one embodiment, the bottom-positioned rigid pipe supports 400 can include friction reduction plates ("sliding plates") that are configured to reduce friction forces which will help in reducing of piping loads on equipment and structures in steam turbine system 358 (e.g., steam turbine nozzle connections). In general, the friction reduction plates are used on flat pipe supports to reduce friction between heavy structures and surfaces. The friction reduction plates can be useful when installed at heavy pressure points, including among heavy pipes, bridges, equipment, and in other high-friction situations. In operation, the friction reduction plates can be installed between the bottom-positioned pipe supports 400 and the piping.

Other piping supports (not specifically shown in FIGS. 6, 7 or 8) that can be utilized in the piping layout of a steam cycle circuit for an CCPP include spring supports 406 that can balance slight vertical and lateral displacements in a piping layout. Typically, these spring supports work on the basis of pre-set coil springs, which exert a variable supporting load over a range of movement in accordance with the spring's specified spring characteristics.

An angulating variable spring support is one type of spring support structure that can be used in the piping layout of the various embodiments. In general, an angulating variable spring support is able to absorb lateral displacements practically free of friction forces. In this manner, the forces are almost completely eliminated in horizontal directions of movement. FIG. 10A shows a schematic view of an angulating variable spring support 402 as a piping support in the piping layout of the various embodiments.

FIG. 6 shows an example of the angulating variable spring support 402 in use with the hot reheat steam pipe 370. In particular, the angulating variable spring support 402 is displaced about piping leading to at least one reheat steam admission valve363. More specifically, the angulating variable spring support 402 is located in an upper portion of vertical piping near an elbow section that leads to horizontal piping that connects with the reheat steam admission valve 363. It is understood that this disposition of the angulating variable spring support 402 is representative of only one possible location and is not meant to be limiting as those skilled in the art will appreciate that the angulating variable spring support 402 can be used in other locations in addition to, or in lieu of, the location depicted in FIG. 6. Further, although an angulating variable spring support 402 is not identified with the HP steam pipe 366 and the cold reheat steam pipe 368 depicted in FIG. 7, and the LP steam pipe 372 shown in FIG. 8, it is understood that this piping support is a possible option in these configurations.

Another type of spring structure that is suitable for use in the piping layout of the various embodiments is a variable spring support. In general, a variable spring support uses coiled springs to support a load and allow movement. The resistance of the coil to a load changes during compression. FIG. 10B shows a schematic view of a variable spring support 406 that can be deployed as part of piping support in a piping layout according to an embodiment of the disclosure.

In addition to showing various examples of piping support that can be used with the main steam pipes in the piping layout of the steam circuit for an CCPP, FIGS. 6, 7 and 8 illustrate other features of the various embodiments. For example, FIGS. 6, 7 and 8 show that the hot reheat steam pipe 370 in FIG. 6, the HP steam pipe 366, and the cold reheat steam pipe 368 in FIG. 7, and the LP steam pipe 372 in FIG. 8 layout do not require long horizontal loops and/or vertical loops close to the steam turbine system 358. In addition, FIG. 6 shows that at least one reheat steam admission valve 363 is configured to receive the hot reheat steam at a side portion thereof and introduce the hot reheat steam to a side portion of the IP turbine section. This contrasts with piping layouts where vertical pipe routing for turbine sections such as the IP section are connected to steam admission valves from the top (e.g., as shown in FIG. 4). Similarly, the feature of fluidly connecting an HP pipe to the HP turbine section via at least one HP steam admission valve about the bottom of the HP turbine section is in contrast to piping that supplies HP steam to HP steam admission valve(s) from the top.

With the optimized piping layout of the various embodiments described herein, it should be apparent that despite the more compact layout with shorter pipe lengths and smaller footprint and volume, and the avoidance of long horizontal thermal expansion loops, vertical thermal expansion loops, or a combination of horizontal and vertical thermal expansion loops in the immediate vicinity of the connection points of the main steam pipes with the steam turbine system and the steam generating source (e.g., HRSG) and sections therebetween, the layout still has sufficient area to permit access and maintenance to the various components of the CCPP. For example, the elevated long horizontal sections of the steam piping from the HRSG to the steam turbine system leaves sufficient space near the ground level for personnel and equipment movement. Also, this creates enough space below the steam pipes to accommodate an above ground steam drain system. Furthermore, the bottom and side entry for the HP steam and reheat steam pipes to the corresponding turbine sections via respective steam admission valves helps create a "clean" operating floor and easier maintenance of the generator rotor, facilitates crane movement, etc. Overall, the elevated long horizontal pipe run and bottom/side steam entry without the use of thermal expansion loops results in optimized and shorter pipe runs that translate directly into an economic advantage for a power plant operator. Furthermore, a piping layout that is more compact with shorter pipe lengths and with a smaller footprint and volume will be less costly with respect to material and construction costs.

The above description of illustrated embodiments of the subject disclosure, including what is described in the Abstract, is not intended to beexhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize. For example, parts, components, steps and aspects from different embodiments may be combined or suitable for use in other embodiments even though not described in the disclosure or depicted in the figures. Therefore, since certain changes may be made in the above-described approaches, without departing from the spirit and scope of the improvements herein involved, it is intended that all of the subject matter of the above description shown in the accompanying drawings shall be interpreted merely as examples illustrating the inventive concept herein and shall not be construed as limiting the disclosure.

In this regard, while the disclosed subject matter has been described in connection with various embodiments and corresponding figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below. For example, references to "one embodiment" of the present disclosure are not intended to be interpreted as excluding the existence of additional embodiments that also incorporate the recited features. Within the scope of the disclosure are also embodiments produced by combination in any order and number of embodiments, examples, and features thereof disclosed in the description and in the claims.

In the appended claims, the terms "including" and "in which" are used as the plain-English equivalents of the respective terms "comprising" and "wherein." Moreover, in the following claims, terms such as "first," "second," "third," "upper," "lower," "bottom," "top," etc. are used merely as labels, and are not intended to impose numerical or positional requirements on their objects. Further, the limitations of the following claims are not written in means-plus-function format and are not intended to be interpreted as such, unless and until such claim limitations expressly use the phrase "means for" followed by a statement of function void of further structure.

In addition, the term "and/or" is satisfied by any one of the following: A is true (or present) and B is false (or not present), A is false (or not present) and B is true (or present), and both A and B are true (or present). Moreover, articles "a" and "an" as used in the subject specification and annexed drawings should generally be construed to mean "one or more" unless specified otherwise or clear from context to be directed to a singular form.

What has been described above includes examples of systems and methods illustrative of the disclosed subject matter. It is, of course, not possible to describe every combination of components or methodologies here. One of ordinary skill in the art may recognize that many further combinations and permutations of the claimed subject matter are possible. Furthermore, to the extent that the terms "includes," "has," "possesses," and the like are used in the detailed description, claims, appendices and drawings, such terms are intended to be inclusive in a manner similar to the term "comprising" as "comprising" is interpreted when employed as a transitional word in a claim. That is, unless explicitly stated to the contrary, embodiments "comprising," "including," or "having" an element or a plurality of elements having a particular property may include additional elements having other properties.

This written description uses examples to disclose several embodiments of the disclosure, including the best mode, and also to enable one of ordinary skill in the art to practice the embodiments of disclosure, including making and using any devices or systems and performing any incorporated methods. The patentable scope of the disclosure is defined by the claims and may include other examples that occur to one of ordinary skill in the art. Such other examples are intended to be within the scope of the claims if they have structural elements that do not differ from the literal language of the claims, or if they include equivalent structural elements with insubstantial differences from the literal language of the claims.

Further aspects of the disclosure are provided by the subject matter of the following clauses:
A piping layout for a steam cycle circuit of a combined-cycle power plant having a steam generating source and a steam turbine system, the piping layout comprising: a first steam pipe to provide a first supply of main steam from the steam generating source to a first turbine section of the steam turbine system via a first steam admission valve at a first steam pressure, wherein the first steam pipe connects to a bottom portion of the first steam admission valve; a cold reheat steam pipe to supply cold reheat steam exhausted from the first turbine section to the steam generating source for reheating thereof; a hot reheat steam pipe to supply hot reheat steam produced in the steam generating source from mixing of the cold reheat steam with steam in the steam generating source to a second turbine section of the steam turbine system via at least one reheat steam admission valve at a second steam pressure, wherein the hot reheat steam pipe connects to a side portion of the at least one reheat steam admission valve; and a second steam pipe to provide a second supply of main steam from the steam generating source to a third turbine section of the steam turbine system via at least one third steam admission valve at a third steam pressure; wherein an arrangement of the first steam pipe, the cold reheat steam pipe, the hot reheat steam pipe, and the second steam pipe between the steam generating source and the steam turbine system including within the immediate vicinity of connection points thereof is without thermal expansion loops.

The piping layout of the preceding clause, wherein each of the first steam pipe, the cold reheat steam pipe, the hot reheat steam pipe, and the second steam pipe comprises a long horizontally extending straight section that is parallel to a centerline axis extending between the steam generating source and the steam turbine system, a first turn section at a first end of the long horizontally extending section that extends generally straight towards a side region of the steam generating source, and a second turn section at a second end of the long horizontally extending straight section opposing the first end that extends towards a side region of the steam turbine system.

The piping layout of any of the preceding clauses, wherein between the second turn section of each of the first steam pipe, the cold reheat steam pipe, the hot reheat steam pipe, and the second steam pipe and corresponding connection points with the steam turbine system, there is an elongation of the first steam pipe, the cold reheat steam pipe, the hot reheat steam pipe, and the second steam pipe that is dissimilar to a thermal expansion loop.

The piping layout of any of the preceding clauses, wherein the elongations of the first steam pipe, the cold reheat steam pipe, the hot reheat steam pipe, and the second steam pipe are horizontally offset from the corresponding portions of the pipes that extend towards the steam turbine system.

The piping layout of any of the preceding clauses, wherein the long horizontally extending straight section of each of the first steam pipe, the cold reheat steam pipe, the hot reheat steam pipe, and the second steam pipe is supported by a civil structure and positioned at a lateral offset distance (A) from a horizontal distance extending between the connection points on the steam generating source and the steam turbine system.

The piping layout of any of the preceding clauses, wherein a ratio of the lateral offset distance (A) of the first steam pipe, the cold reheat steam pipe, the hot reheat steam pipe, and the second steam pipe to a delta in elevation (C) between the elevation of the first steam pipe, the cold reheat steam pipe, the hot reheat steam pipe, and the second steam pipe as supported by the civil structure and the elevation of the first steam pipe, the cold reheat steam pipe, the hot reheat steam pipe, and the second steam pipe at the connection points to the steam turbine system ranges from about 2.5 to about 3.5.

The piping layout of any of the preceding clauses, wherein a ratio of the horizontal distance (B) extending between the connection points of the steam generating source and the steam turbine system to the lateral offset distance (A) of the first steam pipe, the cold reheat steam pipe, the hot reheat steam pipe, and the second steam pipe ranges from about 2.0 to about 3.0.

The piping layout of any of the preceding clauses, wherein selected sections of the first steam pipe, the cold reheat steam pipe, the hot reheat steam pipe, and the second steam pipe in the immediate vicinity of the steam generating source extend vertically and generally straight about a side region of the steam generating source and run horizontally over a top region of the steam generating source to connect therewith at corresponding connection points without any thermal expansion loops located about the top region of the steam generating source.

The piping layout of any of the preceding clauses, further comprising a civil structure to support the sections of the first steam pipe, the cold reheat steam pipe, the hot reheat steam pipe, and the second steam pipe that extend between the steam generating source and the steam turbine system; wherein the civil structure includes: a first civil structure to support the long horizontally extending straight sections of the first steam pipe, the cold reheat steam pipe, the hot reheat steam pipe, and the second steam pipe; and a second civil structure to support the sections of the first steam pipe, the cold reheat steam pipe, the hot reheat steam pipe; and the second steam pipe within the immediate vicinity of the connections to the steam turbine system.

The piping layout of any of the preceding clauses, wherein the second civil structure comprises one or more axial restraints located at an end of the second civil structure near an end of the second turn section close to the steam turbine system, wherein the one or more axial restraints are configured to push thermal expansion of the first steam pipe, the cold reheat steam pipe, the hot reheat steam pipe, and the second steam pipe towards the steam generating source for absorption in the sections of the pipes in the immediate vicinity of the steam generating source that extend vertically about the side region, and wherein the one or more axial restraints are further configured to exert minimal forces and moments on the steam turbine connections and nozzles in the turbine sections of the steam turbine system.

The piping layout of any of the preceding clauses, further comprising a combination of a plurality of piping supports located about the first civil structure and the second civil structure to support various sections of the first steam pipe, the cold reheat steam pipe, the hot reheat steam pipe, and the second steam pipe in the civil structure; wherein the combination of the plurality of piping supports includes piping supports selected from the group consisting of suspension supports, rigid struts, bottom-positioned pipe supports, pipe guide structures, shock absorbers, variable spring supports, and angulating variable spring supports.

A combined-cycle power plant, comprising: a gas turbine system; a steam generating source in fluid communication with the gas turbine system, the steam generating source being a heat recovery steam generator to generate steam from exhaust of the gas turbine system; a steam turbine system including a high pressure section, an intermediate pressure section, and a low pressure section; and a steam cycle circuit operatively coupled to the heat recovery steam generator and the steam turbine system, the steam cycle circuit having a piping layout that includes: a high pressure steam pipe to provide a supply of high pressure steam from the heat recovery steam generator to the high pressure turbine section of the steam turbine system via a high pressure steam admission valve, wherein the high pressure steam pipe connects to a bottom portion of the high pressure steam admission valve; a cold reheat steam pipe to supply cold reheat steam exhausted from the high pressure turbine section to the heat recovery steam generator for reheating thereof; a hot reheat steam pipe to supply hot reheat steam produced in the heat recovery steam generator from mixing of the cold reheat steam with steam in the heat recovery steam generator to the intermediate pressure turbine section of the steam turbine system via at least one reheat steam admission valve at an intermediate pressure, wherein the hot reheat steam pipe connects to a side portion of the at least one reheat steam admission valve with a side connection; and a low pressure steam pipe to provide a supply of low pressure steam from the heat recovery steam generator to the low pressure turbine section of the steam turbine system via at least one low pressure steam admission valve at a low pressure; wherein an arrangement of the high pressure steam pipe, the cold reheat steam pipe, the hot reheat steam pipe, and the low pressure steam pipe between the heat recovery steam generator and the steam turbine system including within the immediate vicinity of connection points thereof are without thermal expansion loops.

The combined-cycle power plant of the preceding clause, wherein each of the high pressure steam pipe, the cold reheat steam pipe, the hot reheat steam pipe, and the low pressure steam pipe comprises a long horizontally extending straight section that is parallel to a centerline axis extending between the heat recovery steam generator and the steam turbine system, a first turn section at a first end of the long horizontally extending section that extends generally straight towards a side region of the heat recovery steam generator, and a second turn section at a second end of the long horizontally extending straight section opposing the first end that extends towards a side region of the steam turbine system.

The combined-cycle power plant of any of the preceding clauses, wherein between the second turn section of each of the high pressure steam pipe, the cold reheat steam pipe, the hot reheat steam pipe, and the low pressure steam pipe, and corresponding connection points with the steam turbine system, there is an elongation of the high pressure steam pipe, the cold reheat steam pipe, the hot reheat steam pipe, and the low pressure steam pipe that is dissimilar to a thermal expansion loop.

The combined-cycle power plant of any of the preceding clauses, wherein the elongation of the high pressure steam pipe, the cold reheat steam pipe, the hot reheat steam pipe, and the low pressure steam pipe are horizontally offset from the corresponding portions of the pipes that extend towards the steam turbine system.

The combined-cycle power plant of any of the preceding clauses, wherein the long horizontally extending straight section of each of the high pressure steam pipe, the cold reheat steam pipe, the hot reheat steam pipe, and the low pressure steam pipe is positioned at a predetermined elevation above a floor of the combined-cycle power plant, wherein the predetermined elevation is greater than 5.0 meters above the floor.

The combined-cycle power plant of any of the preceding clauses, wherein selected sections of the high pressure steam pipe, the cold reheat steam pipe, the hot reheat steam pipe, and the low pressure steam pipe in the immediate vicinity of the heat recovery steam generator extend vertically and generally straight about a side region of the heat recovery steam generator and run horizontally over a top region of the heat recovery steam generator to connect therewith at corresponding connection points without any thermal expansion loops located about the top region of the heat recovery steam generator.

The combined-cycle power plant of any of the preceding clauses, wherein the long horizontally extending straight sections of each of the high pressure steam pipe, the cold reheat steam pipe, the hot reheat steam pipe, and the low pressure steam pipe are supported by a civil structure and laterally offset (A) from a horizontal distance (B) between the connection points on the heat recovery steam generator and the steam turbine system, wherein piping thermal expansion is accommodated by satisfying one or more of the following: a.) a ratio of the lateral offset distance (A) of the high pressure steam pipe, the cold reheat steam pipe, the hot reheat steam pipe, and the low pressure steam pipe to a delta in elevation (C) between the elevation of the high pressure steam pipe, the cold reheat steam pipe, the hot reheat steam pipe, and the low pressure steam pipe as supported by the civil structure and the elevation of the high pressure steam pipe, the cold reheat steam pipe, the hot reheat steam pipe, and the low pressure steam pipe at the connection points to the steam turbine system ranges from about 2.5 to about 3.5; and b.) a ratio of the horizontal distance (B) separating the connection points on the heat recovery steam generator and the steam turbine system to the lateral offset distance (A) of the high pressure steam pipe, the cold reheat steam pipe, the hot reheat steam pipe, and the low pressure steam pipe ranges from about 2.0 to about 3.0.

The combined-cycle power plant of any of the preceding clauses, further comprising a civil structure to support the high pressure steam pipe, the cold reheat steam pipe, the hot reheat steam pipe, and the low pressure steam pipe that extends between the heat recovery steam generator and the steam turbine system at an elevation above a floor in which the heat recovery steam generator and the steam turbine system are situated.

The combined-cycle power plant of any of the preceding clauses, further comprising an above-ground, underslung condenser in fluid communication with the low pressure section of the steam turbine system; wherein the elevation of the high pressure steam pipe, the cold reheat steam pipe, the hot reheat steam pipe, and the low pressure steam pipe at the connection points of the steam turbine system are greater than an average piping elevations of the high pressure steam pipe, the cold reheat steam pipe, the hot reheat steam pipe, and the low pressure steam pipe as supported by the civil structure.

### Parts List

100 combined cycle power plant (CCPP)
102 gas turbine system
104 steam turbine system
105 CCPP (FIG. 4)
106 shaft
108 generator
110 compressor
112 combustor
114 gas turbine
120 steam turbine
122 generator
124 shaft
126 high pressure (HP) section of steam turbine 120
128 intermediate pressure (IP) section
130 low pressure (LP) section
131 condenser
132 steam generating source
133 steam cycle circuit
134 heat recovery steam generator
136 exhaust
140 single shaft combined cycle power plant
142 generator
144 common shaft
200 conventional piping layout
202-206 steam flow pipes
210 floor
212 large, horizontal thermal expansion loop
214 civil structure (rack)
220 CCPP
226 high pressure (HP) section
228 intermediate pressure (IP) section
230 low pressure (LP) section
232 steam generating source
234 HRSG
240 piping layout
242 first steam flow pipe
244 second steam flow pipe
246 reheat steam pipe
260-262 vertically oriented thermal expansion loops
270-274 HRSGI outlets
280-282 vertically oriented thermal expansion loops
284 horizontal top surface 284 of HRSG 134
289
290 first length of pipe of vertically oriented thermal expansion portion of 280-282
292 second length of pipe of vertically oriented thermal expansion portion of 280-282
294 third length of pipe of vertically oriented thermal expansion portion of 280-282
296 two sharp angled turns of thermal expansion portion of 280-282
302 floor
350 piping layout
352 steam cycle circuit
354 CCPP
356 steam generating source (HRSG)
358 steam turbine system
360 HP section of steam turbine system 358
361 HP steam admission valve
362 IP section of steam turbine system 358
363 at least one reheat steam admission valve 363
364 LP section of steam turbine system 358
366 first steam pipe (HP steam pipe)
368 cold reheat steam pipe
370 hot reheat steam pipe
372 second steam pipe (LP steam pipe)
374 long horizontally extending straight section of main steam pipes
376 centerline or power train axis
378 first turn section of long horizontally extending straight section 374 of main steam pipes directed to steam generating source 356
380 second turn section of long horizontally extending straight section 374 of main steam pipes directed to steam turbine system 358
382 floor of CCPP 354
386 shock absorber
388 rigid hangers
389 civil structure
389a first civil structure
389b second civil structure
390 variable spring hangers
392 constant hanger
394 rigid struts that provide lateral restraint
396 rigid struts that provide axial restraint
398 pipe guides
400 bottom-positioned rigid pipe supports
402 angulating variable spring support
406 variable spring support
408 gap

## Claims

1. A piping layout (350) for a steam cycle circuit (352) of a combined-cycle power plant (354) having a steam generating source (356) and a steam turbine system (358), the piping layout comprising:
a first steam pipe (366) to provide a first supply of main steam from the steam generating source (356) to a first turbine section (126) of the steam turbine system (358) via a first steam admission valve (361) at a first steam pressure, wherein the first steam pipe connects to a bottom portion of the first steam admission valve;
a cold reheat steam pipe (368) to supply cold reheat steam exhausted from the first turbine section (126) to the steam generating source (356) for reheating thereof;
a hot reheat steam pipe (370) to supply hot reheat steam produced in the steam generating source (356) from mixing of the cold reheat steam with steam in the steam generating source (356) to a second turbine section (128) of the steam turbine system (358) via at least one reheat steam admission valve (363) at a second steam pressure, wherein the hot reheat steam pipe (370) connects to a side portion of the at least one reheat steam admission valve (363); and
a second steam pipe (372) to provide a second supply of main steam from the steam generating source (356) to a third turbine section (130) of the steam turbine system (358) via at least one third steam admission valve at a third steam pressure;
wherein an arrangement of the first steam pipe (366), the cold reheat steam pipe (368), the hot reheat steam pipe (370), and the second steam pipe (372) between the steam generating source (356) and the steam turbine system (358) including within the immediate vicinity of connection points thereof is without thermal expansion loops.

2. The piping layout (350) according to claim 1, wherein each of the first steam pipe (366), the cold reheat steam pipe (368), the hot reheat steam pipe (370), and the second steam pipe (372) comprises a long horizontally extending straight section (374) that is parallel to a centerline axis (376) extending between the steam generating source (356) and the steam turbine system (358), a first turn section (378) at a first end of the long horizontally extending section that extends generally straight towards a side region of the steam generating source (356), and a second turn section (380) at a second end of the long horizontally extending straight section opposing the first end that extends towards a side region of the steam turbine system (358).

3. The piping layout (350) according to claim 2, wherein between the second turn section (380) of each of the first steam pipe (366), the cold reheat steam pipe (368), the hot reheat steam pipe (370), and the second steam pipe (372) and corresponding connection points with the steam turbine system (358), there is an elongation of the first steam pipe, the cold reheat steam pipe, the hot reheat steam pipe, and the second steam pipe that is dissimilar to a thermal expansion loop.

4. The piping layout (350) according to claim 3, wherein the elongations of the first steam pipe (366), the cold reheat steam pipe (368), the hot reheat steam pipe (370), and the second steam pipe (372) are horizontally offset from the corresponding portions of the pipes that extend towards the steam turbine system (358).

5. The piping layout (350) according to claim 2, wherein the long horizontally extending straight section (374) of each of the first steam pipe (366), the cold reheat steam pipe (368), the hot reheat steam pipe (370), and the second steam pipe (372) is supported by a civil structure (389) and positioned at a lateral offset distance (A) from a horizontal distance extending between the connection points on the steam generating source (356) and the steam turbine system (358).

6. The piping layout (350) according to claim 5, wherein a ratio of the lateral offset distance (A) of the first steam pipe (366), the cold reheat steam pipe (368), the hot reheat steam pipe (370), and the second steam pipe (372) to a delta in elevation (C) between the elevation of the first steam pipe, the cold reheat steam pipe, the hot reheat steam pipe, and the second steam pipe as supported by the civil structure (389) and the elevation of the first steam pipe, the cold reheat steam pipe, the hot reheat steam pipe, and the second steam pipe at the connection points to the steam turbine system (358) ranges from about 2.5 to about 3.5.

7. The piping layout (350) according to claim 5, wherein a ratio of the horizontal distance (B) extending between the connection points of the steam generating source (356) and the steam turbine system (358) to the lateral offset distance (A) of the first steam pipe, the cold reheat steam pipe, the hot reheat steam pipe, and the second steam pipe ranges from about 2.0 to about 3.0.

8. The piping layout (350) according to claim 1, wherein selected sections of the first steam pipe (366), the cold reheat steam pipe (368), the hot reheat steam pipe (370), and the second steam pipe (372) in the immediate vicinity of the steam generating source (356) extend vertically and generally straight about a side region of the steam generating source and run horizontally over a top region of the steam generating source to connect therewith at corresponding connection points without any thermal expansion loops located about the top region of the steam generating source.

9. The piping layout (350) according to claim 2, further comprising a civil structure (389) to support the sections of the first steam pipe (366), the cold reheat steam pipe (368), the hot reheat steam pipe (370), and the second steam pipe (372) that extend between the steam generating source (356) and the steam turbine system (358), wherein the civil structure includes: a first civil structure (389a) to support the long horizontally extending straight sections (374) of the first steam pipe, the cold reheat steam pipe, the hot reheat steam pipe, and the second steam pipe; and a second civil structure (389b) to support the sections of the first steam pipe, the cold reheat steam pipe, the hot reheat steam pipe, and the second steam pipe within the immediate vicinity of the connections to the steam turbine system.

10. The piping layout (350) according to claim 9, wherein the second civil structure (389b) comprises one or more axial restraints (396) located at an end of the second civil structure near an end of the second turn section (380) close to the steam turbine system (358); wherein the one or more axial restraints are configured to push thermal expansion of the first steam pipe (366), the cold reheat steam pipe (368), the hot reheat steam pipe (370), and the second steam pipe (372) towards the steam generating source (356) for absorption in the sections of the pipes in the immediate vicinity of the steam generating source that extend vertically about the side region; and wherein the one or more axial restraints are further configured to exert minimal forces and moments on the steam turbine connections and nozzles in the turbine sections of the steam turbine system.

11. The piping layout (350) according to claim 9, further comprising a combination of a plurality of piping supports located about the first civil structure (389a) and the second civil structure (389b) to support various sections of the first steam pipe (366), the cold reheat steam pipe (368), the hot reheat steam pipe (370), and the second steam pipe (372) in the civil structure (389); wherein the combination of the plurality of piping supports includes piping supports selected from the group consisting of suspension supports (388), rigid struts (394,396), bottom-positioned pipe supports (400), pipe guide structures (398), shock absorbers (386), variable spring supports (406), and angulating variable spring supports (402).

12. A combined-cycle power plant (354), comprising:
a gas turbine system (102);
a steam generating source (356) in fluid communication with the gas turbine system (102), the steam generating source (356) being a heat recovery steam generator (356) to generate steam from exhaust of the gas turbine system (102);
a steam turbine system (358) including a high pressure section (126), an intermediate pressure section (128), and a low pressure section (130); and
a steam cycle circuit (352) operatively coupled to the heat recovery steam generator (356) and the steam turbine system (358), the steam cycle circuit (352) having a piping layout (350) defined according to any of claims 1 to 11.

13. The combined-cycle power plant (354) of claim 12, further comprising an above-ground, underslung condenser (131) in fluid communication with the low pressure section (130) of the steam turbine system (358); wherein the elevation of the high pressure steam pipe (366), the cold reheat steam pipe (368), the hot reheat steam pipe (370), and the low pressure steam pipe (372) at the connection points of the steam turbine system are greater than average piping elevations of the high pressure steam pipe, the cold reheat steam pipe, the hot reheat steam pipe, and the low pressure steam pipe as supported by the civil structure (389).
